(19) Europäisches Patentamt / European Patent Office / Office européen des brevets

(11) **EP 3 834 917 A1**

(12) **EUROPÄISCHE PATENTANMELDUNG**

(43) Veröffentlichungstag:
16.06.2021  Patentblatt 2021/24

(21) Anmeldenummer: 20213258.5

(22) Anmeldetag: **11.12.2020**

(51) Int Cl.:
*B01D 53/26* (2006.01)    *B01D 53/30* (2006.01)
*H01H 33/56* (2006.01)    *H02B 13/055* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: **13.12.2019   DE 102019134269**

(71) Anmelder:
• **WIKA Alexander Wiegand SE & Co. KG**
  **63911 Klingenberg/Main (DE)**
• **Westnetz GmbH**
  **44139 Dortmund (DE)**

(72) Erfinder:
• **FRANZ, Klaus**
  **63811 Stockstadt (DE)**
• **FUCHS, Daniel**
  **63743 Aschaffenburg (DE)**
• **HULLER, Dominik**
  **63920 Großheubach (DE)**
• **REZUN, Christoph**
  **45731 Waltrop (DE)**
• **SAEWE, Thomas**
  **58710 Menden (DE)**

(74) Vertreter: **Liedtke & Partner Patentanwälte**
  **Gerhart-Hauptmann-Straße 10/11**
  **99096 Erfurt (DE)**

(54)   **SERVICEANLAGE FÜR GASRÄUME**

(57)   Die Erfindung betrifft eine Serviceanlage (1) für Gasräume (2.1 bis 2.n) mit einer Gasbehandlungsvorrichtung (3) zum Behandeln eines in zumindest einem Gasraum (2.1 bis 2.n) vorhandenen Gases, zumindest einer Sensorvorrichtung zur Überwachung zumindest einer Gaseigenschaft des Gases, zumindest einem mit der Gasbehandlungsvorrichtung (3) und der zumindest einen Sensorvorrichtung gekoppelten Anschluss (7.1 bis 7.n), welcher zur Kopplung mit dem Gasraum (2.1 bis 2.n) ausgebildet ist, zumindest einer Fördervorrichtung (8) zur Förderung eines Gases aus dem Gasraum (2.1 bis 2.n) in die Gasbehandlungsvorrichtung (3) und aus der Gasbehandlungsvorrichtung (3) zumindest mittelbar zurück in den Gasraum (2.1 bis 2.n) und zumindest einer Steuereinheit (22), welche zumindest mit der Sensorvorrichtung verbunden ist und zumindest die Fördervorrichtung (8) und/oder die Gasbehandlungsvorrichtung (3) überwacht und steuert.

FIG 1

EP 3 834 917 A1

**Beschreibung**

Die Erfindung betrifft eine Serviceanlage für Gasräume.

Aus dem Stand der Technik sind allgemein Anlagen mit Gasräumen, beispielsweise elektrische Schaltanlagen, bekannt, bei welchem ein Gasraum ein Behälter für ein gasisoliertes elektrisches Hochspannungsbetriebsmittel ist. Derartige Hochspannungsbetriebsmittel sind beispielsweise elektrische Leistungsschalter und Messwandler.

Solche elektrischen Hochspannungsbetriebsmittel sind mit einem Isolier- und Löschgas als Schutzgas, beispielsweise Schwefelhexafluorid, kurz $SF_6$, gefüllt. Das Schutzgas ist unter einem vorgegebenen Mindestdruck, beispielsweise 6 bar Überdruck, in dem entsprechenden Gasraum eingeschlossen und bewirkt eine Löschung eines Lichtbogens, welcher zwischen elektrischen Kontakten bei deren Öffnung entsteht. Eine sichere Funktion ist dabei insbesondere von einer Reinheit des Schutzgases abhängig. Die Reinheit des Schutzgases kann insbesondere durch das Eindringen von Feuchtigkeit oder Luft in das Schutzgasvolumen oder durch die Entstehung von Zersetzungsprodukten des Schutzgases beeinträchtigt werden.

Auch wenn ein Betriebsdruck des Gasraums ein Vielfaches des Atmosphärendrucks beträgt, so lässt sich in der Regel konstruktionsbedingt ein Eindringen von Feuchtigkeit in Form von Wasserdampf durch Diffusion in den Gasraum nicht vermeiden. Der in den Gasraum eindringende Wasserdampf verringert die Reinheit des Schutzgases und damit dessen elektrische Eigenschaften, insbesondere dessen Permittivität. Grundsätzlich sollte jedoch ein Feuchtigkeitsanteil im Schutzgas so gering sein, dass ein Drucktaupunkt des Schutzgases von -5 °C nicht überschritten wird.

Um dies zu bewirken, ist aus der EP 3 283 833 B1 eine Anordnung bekannt, welche

- einen ersten und einen zweiten mit Schutzgas gefüllten Gasraum,
- ein den ersten und den zweiten Gasraum verbindendes Leitungssystem,
- einen in dem Leitungssystem angeordneten Verdichter,
- ein in dem Leitungssystem angeordnetes Gastrocknungsaggregat,
- Mittel zur Erfassung eines Gasdrucks innerhalb des Leitungssystems,
- Ventile, die so ansteuerbar sind, dass der Verdichter wahlweise Gas von dem ersten Gasraum in den zweiten Gasraum und Gas von dem zweiten Gasraum in den ersten Gasraum fördern kann,
- Mittel zur Steuerung des Verdichters in Abhängigkeit des Gasdrucks innerhalb des Leitungssystems sowie
- Mittel zur Steuerung der Ventile in Abhängigkeit der gewünschten Förderrichtung des Gases

umfasst. Weiterhin wird ein Verfahren zum Trocknen eines Gasraums mit einer in dem Gasraum vorherrschenden Schutzgasatmosphäre unter Überdruck mit einem Betriebsdruck und einem vorgegebenen Mindestdruck beschrieben, wobei der vorgegebene Mindestdruck Gasraums überwacht wird und der Betriebsdruck größer als der Mindestdruck ist. Das Verfahren umfasst folgende Schritte:

- Entnehmen einer ersten Teilmenge des Schutzgases aus dem Gasraum, wobei die Teilmenge einer Druckdifferenz äquivalent ist, die kleiner oder gleich einer Differenz zwischen dem Betriebsdruck und dem Mindestdruck ist,
- Einbringen einer zweiten Teilmenge eines trockenen oder getrockneten Schutzgases in den Gasraum bis zu einem Gasdruck, der größer als der Mindestdruck ist und
- Wiederholen der zuvor genannten Verfahrensschritte nach einer vorgegebenen Wartezeit.

Der Erfindung liegt die Aufgabe zu Grunde, eine neuartige Serviceanlage für Gasräume anzugeben.

Die Aufgabe wird erfindungsgemäß gelöst durch eine Serviceanlage, welche die im Anspruch 1 angegeben Merkmale aufweist.

Vorteilhafte Ausgestaltungen der Erfindung sind Gegenstand der abhängigen Ansprüche.

Eine erfindungsgemäße Serviceanlage für Gasräume umfasst eine Gasbehandlungsvorrichtung zum Behandeln eines in zumindest einem Gasraum vorhandenen Gases, wobei die Gasbehandlungsvorrichtung ausgebildet ist, eine Reinigung und/oder eine Trocknung und/oder eine Temperierung des Gases auszuführen, um insbesondere eine Funktionsfähigkeit des Gases aufrechtzuerhalten oder wiederherzustellen. Weiterhin umfasst die Serviceanlage eine Sensorvorrichtung zur Überwachung zumindest einer Gaseigenschaft des Gases, wobei die Sensorvorrichtung ausgebildet ist, als Gaseigenschaft einen Gasdruck und/oder eine Gasdichte und/oder eine Gastemperatur und/oder eine Gasfeuchte und/oder eine Konzentration von Zersetzungsprodukten im Gas zu erfassen, um insbesondere eine genaue Steuerung der Gasbehandlungsvorrichtung, beispielsweise zur Entfeuchtung und/oder Reinigung eines Gases, zu ermöglichen. Ferner umfasst die Serviceanlage zumindest einen mit der Gasbehandlungsvorrichtung und der zumindest einen Sensorvorrichtung gekoppelten Anschluss, welcher zur Kopplung mit dem Gasraum ausgebildet ist, und zumindest eine Fördervorrichtung zur Förderung eines Gases aus dem Gasraum in die Gasbehandlungsvorrichtung und aus der Gasbehandlungsvorrichtung zumindest mittelbar zurück in den Gasraum. Zusätzlich ist zumindest eine Steuereinheit vorgesehen, welche zumindest mit der Sensorvorrichtung verbunden ist und zumindest die Fördervorrichtung und/oder die Gasbehandlungsvorrichtung überwacht und steuert.

Die Serviceanlage ermöglicht eine zuverlässige Gasbehandlung an zumindest einem Gasraum, beispielsweise einem Gasraum einer elektrischen Schaltanlage.

In einer möglichen Ausgestaltung der Serviceanlage ist diese dazu ausgebildet, mit der Steuereinheit ein Gasvolumen in einem verbundenen Gasraum anhand eines bekannten Volumens von Leitungen zwischen dem Anschluss und der Gasbehandlungsvorrichtung und/oder eines bekannten Volumens eines Anschlussschlauchs, in welchem der Anschluss ausgebildet ist, und/oder eines bekannten Volumens eines Gasvorratstanks der Gasbehandlungsvorrichtung zu ermitteln. Weiterhin ist die Serviceanlage in dieser Ausgestaltung dazu ausgebildet, mit der Steuereinheit den Anschlussschlauch, die Leitungen zwischen dem Anschluss und der Gasbehandlungsvorrichtung und den Gasvorratstank bei der Entnahme des Gases aus dem Gasraum nacheinander stufenweise mit Gas zu fluten und gleichzeitig den Gasdruck innerhalb des Gasraums zu überwachen oder den Gasraum bei einer stufenweise nacheinander erfolgenden Entnahme des Gases aus dem Anschlussschlauch, den Leitungen zwischen dem Anschluss und der Gasbehandlungsvorrichtung und dem Gasvorratstank mit dem entnommenen Gas zu fluten und gleichzeitig den Gasdruck innerhalb des Gasraums zu überwachen und anhand einer bei der Überwachung des Gasdrucks innerhalb des Gasraums ermittelten Druckveränderung das Gasvolumen in dem Gasraum zu ermitteln. Zur Überwachung des Gasdrucks innerhalb des Gasraums nutzt die Steuervorrichtung insbesondere einen Drucksensor der Sensorvorrichtung, welcher beispielsweise möglichst unmittelbar mit dem Gasraum verbunden ist. Vor der stufenweisen Flutung bzw. Entnahme von Gas aus den genannten bekannten Volumina wird vorteilhaft ein definierter Ausgangszustand hergestellt, beispielsweise durch ein Evakuieren dieser Volumina bzw. durch ein Beaufschlagen dieser Volumina mit einem vorgegebenen Druck, der größer ist als der aktuelle Betriebsdruck des Gasraums. Alternativ kann der konkret vorliegende Ausgangszustand mittels Sensoren innerhalb der Serviceanlage ermittelt werden. Anschließend kommt es durch die beschriebene stufenweise Flutung bzw. Entnahme von Gas aus den bekannten Volumina zu einem stufenweisen Druckausgleich zwischen diesen und dem Gasraum. Mittels der vorgenannten Ausgestaltung der Serviceanlage ist eine besonders genaue, automatische Bestimmung des inneren freien Volumens eines angeschlossenen Gasraums möglich. Das innere freie Volumen eines Gasraums ist eine Größe, die oftmals selbst dem Betreiber des Gasraums nicht genau bekannt ist. Somit wird die Serviceanlage durch diese Ausgestaltung in die Lage versetzt, das unbekannte Volumen zu bestimmen und sicherheitsrelevante Steuerprozesse unter Einbezug dieser Größe zuverlässiger und effizienter auszuführen. Infolge der Bestimmung des Volumens des Gasraums kann beispielsweise präzise eingestellt und gesteuert werden, welche Menge an Gas im Verlauf eines Gasbehandlungsprozesses aus dem Gasraum entnommen werden kann, ohne einen vorgegebenen Minimaldruck des Gasraums zu erreichen oder zu unterschreiten.

In einer weiteren möglichen Ausgestaltung der Serviceanlage können Anschlussschläuche mit unterschiedlichen Längen verwendet werden, wobei hierzu zur Bestimmung des Volumens eines Anschlussschlauchs, in welchem der Anschluss ausgebildet ist, verschiedene definierte Längen vorgegeben und hinterlegt sind. Auch besteht die Möglichkeit, eine Länge und gegebenenfalls einen Querschnitt eines verwendeten Anschlussschlauches über eine Benutzerschnittstelle manuell einzugeben. Dies ermöglicht, dass beispielsweise bei schwierig zu erreichenden Gasräumen Anschlussschläuche mit großer Länge verwendet werden können und nicht drucküberwachte Schlauchverlängerungen entfallen können. Gleichzeitig ist keine pauschale Verwendung von möglichst langen Anschlussschläuchen erforderlich, so dass eine Effektivität der Gasbehandlung nicht beeinträchtigt wird.

In einer weiteren möglichen Ausgestaltung der Serviceanlage ist diese dazu ausgebildet, mit der Steuereinheit aus einem Minimaldruck des Gases, einem Nominaldruck des Gases und einem Maximaldruck des Gases einen unteren ersten Arbeitspunkt und einen oberen zweiten Arbeitspunkt zu bestimmen, wobei der untere erste Arbeitspunkt dabei insbesondere oberhalb des Minimaldrucks liegt und der obere zweite Arbeitspunkt dabei insbesondere unterhalb des Maximaldrucks liegt. Weiter kann die Serviceanlage dazu ausgebildet sein, mit der Steuereinheit den Gasbehandlungsprozess automatisch mit einem Einbringen von frischem Gas in den Gasraum bis zum Erreichen des oberen zweiten Arbeitspunkts zu starten, wenn der Nominaldruck näher am unteren ersten Arbeitspunkt als am oberen zweiten Arbeitspunkt liegt, den Gasbehandlungsprozess automatisch mit einer Entnahme von Gas aus dem Gasraum bis zum Erreichen des unteren ersten Arbeitspunkts zu starten, wenn der Nominaldruck näher am oberen zweiten Arbeitspunkt als am unteren ersten Arbeitspunkt liegt und/oder bei der Durchführung des Gasbehandlungsprozesses ein aus dem jeweiligen Gasraum entnommenes Gasvolumen derart zu wählen, dass ein Gasdruck innerhalb des Gasraums nach der Entnahme des Gasvolumens oberhalb des Minimaldrucks liegt, insbesondere oberhalb des unteren ersten Arbeitspunktes liegt. Hierbei wird ermöglicht, dass stets ein relativ großes Gasvolumen zur Gasbehandlung aus dem Gasraum entnommen werden kann, ohne dass ein Gasdruck innerhalb des Gasraums unterhalb des Minimaldrucks liegt, wobei eine Behandlungszeit aufgrund der Maximierung des entnommenen Gasvolumens und daraus folgender Minimierung einer erforderlichen Wartezeit bis zur Durchmischung von in den Gasraum frisch eingefülltem Gas und dort bereits vorhandenem Gas minimiert wird. Dabei wird eine Betriebsfähigkeit des Gasraums, insbesondere eines innerhalb des Gasraums angeordneten elektrischen Betriebsmittels, beispielsweise eines sich im laufenden Betrieb befindenden Leistungsschalters, auch während der Gasbehandlung bei gleichzeitig großem behandelbaren Gasvolumen sichergestellt.

Der Minimal- und Maximaldruck sind hierbei sicherheitsrelevante Parameter eines Gasraums, die in der Regel durch den Hersteller oder Betreiber des Gasraums vorgegeben werden und im laufenden Betrieb des Gasraums eingehalten werden müssen. Der Nominaldruck ist in der Regel ebenfalls ein vorgegebener Wert, der beschreibt, mit welchem Druck der Gasraum im normalen Betrieb gefüllt sein soll. Dieser Wert wird auch als Betriebsdruck oder Standardbetriebsdruck bezeichnet. Erreicht der Druck innerhalb eines Gasraums den Minimal- oder Maximaldruck, führt dies in der Regel zur Auslösung eines Alarms. Ist der Gasraum beispielsweise Teil einer gasisolierten Schaltanlage bzw. beherbergt der Gasraum ein elektrisches Betriebsmittels, führt ein solcher Alarm unter Umständen zu einem Abschalten des Betriebsmittels oder der ganzen Anlage, weil ein sicherer Betrieb dann nicht mehr sichergestellt ist. Ein solcher Alarmfall ist häufig für den Betreiber des Gasraums mit enormen Folgekosten verbunden. Durch die Festlegung der beiden Arbeitspunkte ist die Serviceanlage in dieser möglichen vorteilhaften Ausgestaltung in der Lage, das Auslösen eines Alarms während des Gasbehandlungsprozesses zu vermeiden, da sie dazu eingerichtet ist, den Druck innerhalb des Gasraums nur innerhalb des Intervalls zwischen dem unteren ersten und dem oberen zweiten Arbeitspunkt zu verändern. Ein Erreichen des Minimal- oder Maximaldrucks kann somit verhindert werden, so dass die Serviceanlage auch an einem Gasraum im laufenden Betrieb eine Gasbehandlung mit hoher Zuverlässigkeit und Sicherheit ausführen kann.

Die Festlegung von solchen Arbeitspunkten kann grundsätzlich auch durch eine Benutzereingabe erfolgen - dies setzt jedoch voraus, dass der Benutzer sicherheits- und regelungstechnisch relevante Parameter des Gasraums sowie der Serviceanlage kennt, aus denen sich sichere Arbeitspunkte ableiten lassen. Die automatische Bestimmung der Arbeitspunkte durch die Serviceanlage selbst bzw. durch die Steuereinheit macht entsprechende Kenntnisse des Benutzers überflüssig und ermöglicht somit eine vereinfachte Benutzung der Serviceanlage bei gleichzeitig höchster Zuverlässigkeit und Sicherheit.

Insbesondere kann die Serviceanlage in einer Weiterbildung dieser Ausgestaltung dazu eingerichtet sein, mit der Steuereinheit den Abstand zwischen dem Minimaldruck und dem unteren ersten Arbeitspunkt sowie den Abstand zwischen dem oberen zweiten Arbeitspunkt und dem Maximaldruck derart festzulegen, dass eine maximale Messunsicherheit der Sensorvorrichtung, ein Absolutdruck innerhalb des Gasraums, eine Temperatur des Gases, ein Regel-, Steuer- oder Antwortverhalten der Steuervorrichtung und/oder eine Temperaturänderung innerhalb des Gasraums berücksichtigt werden bzw. wird.

In einer Situation, in welcher Minimaldruck (Pmin), Nominaldruck (Pnom) und Maximaldruck (Pmax) hinreichend weit voneinander entfernt sind, ergibt sich bei der Bestimmung des unteren ersten Arbeitspunkts (Pa1) und des oberen zweiten Arbeitspunkts (Pa2) meist, dass die Drücke in folgende Größenverhältnis zueinander stehen:

$$Pmin < Pa1 < Pnom < Pa2 < Pmax.$$

In einem solchen Fall ist eine sehr sichere, zuverlässige Gasbehandlung möglich. Wenn jedoch die Abstände zwischen Minimaldruck (Pmin), Nominaldruck (Pnom) und Maximaldruck (Pmax) sehr gering sind, können Situationen entstehen, in denen das Risiko einer Alarmauslösung während der Gasbehandlung steigt. So kann sich etwa ergeben, dass beide durch die Steuereinheit ermittelte Arbeitspunkte entweder oberhalb oder unterhalb des Nominaldrucks liegen. Es kann für einen Benutzer schwierig sein, eine solche Situation zu erkennen und korrekt zu bewerten. Deshalb ist die Serviceanlage in einer weiteren möglichen Ausgestaltung dazu ausgebildet, mit der Steuereinheit anhand der Arbeitspunkte zu ermitteln, ob der Gasbehandlungsprozess sicher automatisch durchgeführt werden kann, indem die Serviceanlage dann, wenn der erste untere Arbeitspunkt größer als der Nominaldruck ist, den Gasbehandlungsprozess nur dann starten kann, wenn eine Nutzerbestätigung erfolgt, dass der untere erste Arbeitspunkt mit dem Nominaldruck gleichgesetzt wird. Ist der obere zweite Arbeitspunkt kleiner als der Nominaldruck, kann die Serviceanlage den Gasbehandlungsprozess nur dann starten, wenn eine Nutzerbestätigung erfolgt, dass der obere zweite Arbeitspunkt mit dem Nominaldruck gleichgesetzt wird. Durch diese Gleichsetzung eines Arbeitspunkts mit dem Nominaldruck wird dabei zwar der Abstand zum nächstgelegenen Grenzdruck (Minimaldruck bzw. Maximaldruck) reduziert, dennoch ist das Risiko, einen Alarm auszulösen bzw. einen gefährlichen Druckzustand im Gasraum einzustellen, noch deutlich geringer, als wenn der Arbeitspunkt direkt auf den Grenzdruck gelegt wird. Die Serviceanlage schlägt dem Benutzer also eine sinnvolle Parameteranpassung vor, die dieser unter Abwägung der Risiken annehmen kann. Liegen beide Arbeitspunkte auf dem gleichen Wert oder ist der obere zweite Arbeitspunkt sogar niedriger als der untere erste Arbeitspunkt, bricht die Serviceanlage den Gasbehandlungsprozess ab. Somit kann sichergestellt werden, dass ein Benutzer auf eine Vielzahl von Risiken automatisch aufmerksam gemacht wird und effizient entscheiden kann, welche Parameter angepasst werden sollen, falls dies unter Beachtung der entstehenden Risiken vertretbar ist. Dadurch kann eine Gasbehandlung mit der Serviceanlage in sehr vielen Situationen sicher durchgeführt werden; in riskanten Situationen wird zugleich automatisch verhindert, dass eine Gasbehandlung ausgeführt wird. Dies trägt weiter dazu bei, eine Handhabung der Serviceanlage zu vereinfachen und eine hohe Sicherheit zu ermöglichen.

In einer weiteren möglichen Ausgestaltung der Serviceanlage umfasst die Gasbehandlungsvorrichtung zumindest einen Trocknungsfilter zur Absorption von Feuchte. Ein derartiger Trocknungsfilter ermöglicht eine zuverlässige Trocknung des Gases und ist kostengünstig verfügbar sowie einfach anwendbar. Alternativ oder zusätzlich umfasst die Gasbehandlungsvorrichtung zumindest zwei Feuchtesensoren, wobei ein erster Feuchtesensor zumindest mittelbar mit einem Eingang des zumindest einen Trocknungsfilters gekoppelt ist und ein zweiter Feuchtesensor zumindest mittelbar mit einem Ausgang des zumindest einen Trocknungsfilters gekoppelt ist. Die Feuchtesensoren sind zumindest mit der Steuereinheit gekoppelt, welche aus mittels der Feuchtesensoren ermittelten Feuchtewerten einen Füllstand des zumindest einen Trocknungsfilters ermittelt. Hierdurch wird eine einfache und zuverlässige Erfassung des Füllstandes des zumindest einen Trocknungsfilters und daraus folgend einer Bewertung, wie hoch eine Feuchteabsorption des Trocknungsfilters ist, ermöglicht. Daraus kann wiederum abgeleitet werden, wie lange Gas in dem Trocknungsfilter verweilen oder wie häufig Gas durch diesen hindurchgepumpt werden muss, um einen gewünschten Trocknungseffekt zu erzielen.

In einer weiteren möglichen Ausgestaltung der Serviceanlage umfasst die Gasbehandlungsvorrichtung zumindest zwei Trocknungsfilter zur Absorption von Feuchte, wobei die Trocknungsfilter abwechselnd nutzbar sind. Dies ermöglicht, dass während der Nutzung eines Trocknungsfilters der zumindest eine verbleibende Trocknungsfilter, beispielsweise durch Zuführung von warmer Luft, getrocknet werden kann.

In einer weiteren möglichen Ausgestaltung der Serviceanlage ist die Sensorvorrichtung oder die Steuereinheit mit zumindest einem im oder am Gasraum angeordneten Gasraumsensor, welcher Bestandteil einer den jeweiligen Gasraum umfassenden Anlage ist, zur Erfassung zumindest einer Gaseigenschaft datentechnisch oder elektrisch gekoppelt oder koppelbar. Die Kopplung kann dabei direkt mit dem Gasraumsensor oder mittelbar über einen zwischengeschalteten Schaltschrank der Anlage erfolgen. Dies führt zu einer signifikanten Verringerung einer Komplexität und von Kosten der Serviceanlage aufgrund einer Nutzung von bereits in der die Gasräume umfassenden Anlage vorhandenen Sensoren. Weiterhin kann die Überwachung der Gasraumsensoren als zusätzliche Sicherheitsfunktion genutzt werden, um einen möglichen gefährlichen Zustand des Gasraums, z. B. einen starken Druckabfall im Gasraum, sicher erkennen zu können und die Serviceanlage gegebenenfalls abzuschalten. Bei dem Gasraumsensor kann es sich insbesondere um einen elektronischen Druck-, Temperatur- und/oder Gasdichtetransmitter handeln. Weiterhin kann es sich um so genannten Gasdichtewächter handeln, der über einen Schaltausgang das Erreichen vorgegebener Grenzwerte von Druck und/oder Gasdichte signalisiert, so z. B. das Erreichen eines vorgegebenen Minimal- oder Maximaldrucks des Gasraums.

In einer weiteren möglichen Ausgestaltung der Serviceanlage ist die Steuereinheit mit zumindest einer Gasraumüberwachungseinheit gekoppelt oder koppelbar, wobei die Gasraumüberwachungseinheit mit einem Schaltschrank der Anlage oder mit einem im oder am Gasraum angeordneten Gasraumsensor gekoppelt ist und wobei die Gasraumüberwachungseinheit dazu ausgebildet ist, die Serviceanlage abzuschalten, wenn vom Schaltschrank oder dem Gasraumsensor ein gefährlicher Zustand des Gasraums signalisiert wird. So können beispielsweise Schaltsignale von der Gasraumüberwachungseinheit abgegriffen werden, welche beispielsweise zu einer Sicherheitsabschaltung oder dem Auslösen eines Alarms aufgrund von in dem zumindest einen Gasraumsensor, beispielsweise einem Gasdichtewächter, hinterlegten Schaltpunkten genutzt werden. Hierdurch kann bei einer Sicherheitsabschaltung der die Gasräume umfassenden Anlage auch die Serviceanlage automatisch durch die Gasraumüberwachungseinheit deaktiviert werden.

In einer weiteren möglichen Ausgestaltung der Serviceanlage umfasst diese zumindest zwei, beispielsweise bis zu sechs, mit der Gasbehandlungsvorrichtung und der zumindest einen Sensorvorrichtung gekoppelte Anschlüsse, wobei jeder Anschluss zur Kopplung mit jeweils zumindest einem Gasraum ausgebildet ist. Weiterhin umfasst die Steuereinheit eine Schaltvorrichtung zu einer Schaltung zumindest eines Schaltelements zum Öffnen und Schließen der Anschlüsse, wobei die Schaltvorrichtung mit der Steuereinheit verbunden ist, wobei die Steuereinheit zu einer automatischen Ansteuerung des zumindest einen Schaltelements ausgebildet ist, so dass ein Automatisierungsgrad und ein Bedienkomfort erhöht werden können und Bedienpersonal eingespart werden kann. Aufgrund der Mehrzahl von Anschlüssen können in vorteilhafter Weise mehrere Gasräume, beispielsweise Gasräume einer elektrischen Schaltanlage, gleichzeitig mit der Serviceanlage gekoppelt sein und eine Gasbehandlung eines jeweils innerhalb der Gasräume enthaltenen Gases kann im Gegensatz zum aus dem Stand der Technik bekannten Lösungen ohne Demontage eines Anschlusses von einem Gasraum und anschließende Montage an einen weiteren Gasraum durch ein mittels der Schaltvorrichtung durchgeführtes Umschalten zwischen den verschiedenen Anschlüssen erfolgen. Hierdurch ist einerseits ein Montage- und Zeitaufwand signifikant verringert und andererseits wird eine Langlebigkeit und Betriebssicherheit der Anschlüsse und der Serviceanlage und von korrespondierenden Anschlüssen der Gasräume aufgrund der verringerten Anzahl an Montage- und Demontagevorgängen signifikant erhöht. Dabei können die Anschlüsse in vorteilhafter Weise derart ausgestaltet sein, dass die Serviceanlage auch dann betrieben werden kann, wenn nicht an jedem der verfügbaren Anschlüsse ein Gasraum angeschlossen ist. Die Anschlüsse können hierzu beispielsweise mit selbstschließenden Kupplungen versehen sein.

In einer weiteren möglichen Ausgestaltung der Serviceanlage umfasst die Schaltvorrichtung mehrere dezentrale Schaltelemente, welche jeweils mit einem Anschluss gekoppelt sind und zu einem Öffnen und Schließen des entsprechenden Anschlusses ausgebildet sind. Derartige Schaltelemente können bei einem Defekt im Gegensatz zu einem zentralen Schaltelement einzeln getauscht oder instandgesetzt werden, wodurch ein Kosten- und Materialaufwand sehr gering ist. Weiterhin können mit den dezentralen Schaltelementen die einzelnen Anschlüsse individuell geöffnet und geschlossen werden, so dass einen zielgerichtete Steuerung und Durchführung von Gasbehandlungsprozessen an den verbundenen Gasräumen einzeln erfolgen kann.

In einer weiteren möglichen Ausgestaltung der Serviceanlage sind die dezentralen Schaltelemente der Schaltvorrichtung unmittelbar am jeweils zugehörigen Anschluss angeordnet und ermöglicht eine Minimierung eines Totvolumens ausgehend von dem Gasraum nach dem jeweiligen Anschluss.

In einer weiteren möglichen Ausgestaltung der Serviceanlage sind das jeweilige dezentrale Schaltelement der Schaltvorrichtung und der zugehörige Anschluss in einem Anschlussschlauch ausgebildet. Dies ermöglicht eine besonders einfache, zuverlässige und flexible Kopplung der Serviceanlage mit der Mehrzahl der Gasräume bei gleichzeitiger einfacher Handhabung. Beispielsweise ist ein Anschlussschlauch mit einem Ende an der

Serviceanlage angeschlossen, während das Schaltelement und der zugehörige Anschluss in einem Abschnitt am anderen Ende des Anschlussschlauchs angeordnet sind. Dadurch kann in vorteilhafter Weise eine Verbindung zum Gasraum unmittelbar hinter der Kupplung des Gasraums, an welche der Anschlussschlauch angeschlossen wird, abgesperrt werden Somit kann beispielsweise in einem Fehlerfall, falls etwa am Anschlussschlauch ein Leck auftritt, ein Austritt von Gas aus dem Gasraum wirksam unterbunden werden.

In einer weiteren möglichen Ausgestaltung der Serviceanlage umfasst die Sensorvorrichtung mehrere dezentrale Sensoren zur Erfassung der zumindest einen Gaseigenschaft, wobei jeder Sensor jeweils mit einem Anschluss gekoppelt ist. Bei einem Ausfall eines Sensors ist bei dieser Ausgestaltung ein Betrieb an den weiteren Anschlüssen weiterhin möglich.

In einer weiteren möglichen Ausgestaltung der Serviceanlage sind die dezentralen Sensoren der Sensorvorrichtung unmittelbar am jeweils zugehörigen Anschluss angeordnet. Bei dieser Ausgestaltung ist eine Erfassung der Gaseigenschaft besonders nah am jeweiligen Anschluss und somit am jeweiligen Gasraum möglich.

In einer weiteren möglichen Ausgestaltung der Serviceanlage sind der jeweilige dezentrale Sensor der Sensorvorrichtung und der zugehörige Anschluss in einem Anschlussschlauch ausgebildet. Dies ermöglicht eine besonders einfache, zuverlässige und flexible Kopplung der Serviceanlage mit der Mehrzahl der Gasräume bei gleichzeitiger einfacher Handhabung.

In einer weiteren möglichen Ausgestaltung der Serviceanlage sind ein jeweiliger dezentraler Sensor und ein jeweiliges dezentrales Schaltelement derart an einem zugehörigen Anschluss oder zugehörigen Ende eines Anschlussschlauchs angeordnet, dass der Sensor mit einem Leitungsabschnitt zwischen dem Gasraum und dem Schaltelement kommuniziert. Dadurch kann eine Gaseigenschaft des Gasraums auch dann durch den Sensor überwacht werden, wenn der Anschluss durch das Schaltelement verschlossen ist. Somit kann eine ununterbrochene Überwachung von Gasräumen durch die Serviceanlage ermöglicht werden, wodurch die Sicherheit des Anlagenbetriebs erhöht wird; weiterhin kann vor dem Öffnen des Schaltventils der Zustand des Gasraums erfasst und insbesondere durch sicherheitsrelevante Funktionen verarbeitet werden.

In einer weiteren möglichen Ausgestaltung der Serviceanlage umfasst die Schaltvorrichtung zumindest ein zentrales Schaltelement, welches mit mehreren Anschlüssen gekoppelt und zu einem Öffnen und Schließen mehrerer Anschlüsse ausgebildet ist. Ein solches zentrales Schaltelement bewirkt einen geringen Material- und Kostenaufwand und ist einfach steuerbar.

In einer weiteren möglichen Ausgestaltung der Serviceanlage ist das zumindest eine zentrale Schaltelement in einer zentralen Schaltbox an der Serviceanlage angeordnet und somit besonders einfach, beispielsweise für eine Wartung, zugänglich.

In einer weiteren möglichen Ausgestaltung der Serviceanlage ist die Sensorvorrichtung als so genannter Sensorblock, insbesondere als Zubehörteil, ausgebildet und kann beispielsweise auch nachträglich an der die Gasräume umfassenden Anlage nachgerüstet werden.

In einer weiteren möglichen Ausgestaltung der Serviceanlage umfasst die Sensorvorrichtung zumindest einen zentralen Sensor zur Erfassung der zumindest einen Gaseigenschaft, welcher mit mehreren Anschlüssen gekoppelt ist. Ein solcher zentraler Sensor bewirkt, dadurch, dass nur ein Sensor für alle Anschlüsse erforderlich ist, einen geringen Material- und Kostenaufwand und ist einfach betreibbar.

In einer weiteren möglichen Ausgestaltung der Serviceanlage umfasst jeder Anschluss einen separaten Gaseinlass und einen separaten Gasauslass und die Fördervorrichtung und die Gasbehandlungsvorrichtung sind zu einer kontinuierlichen Ausführung eines Gasbehandlungsprozesses ausgebildet, in welchem kontinuierlich Gas aus einem Gasraum entnommen wird, das Gas behandelt wird und anschließend das behandelte Gas in den Gasraum zurückgeführt wird. Ein solcher kontinuierlicher Prozess ermöglicht in einfacher Weise eine dauerhafte Trocknung des Gases.

In einer weiteren möglichen Ausgestaltung der Serviceanlage ist jeder Anschluss in Abhängigkeit einer Förderrichtung der Fördervorrichtung und einem Schaltzustand der Schaltvorrichtung als Gaseinlass oder als Gasauslass ausgebildet. Bei einer solchen Ausbildung kann die Gasbehandlung an jedem Gasraum durchgeführt werden, welcher zumindest einen korrespondierenden Anschluss aufweist. Des Weiteren ist die Gasbehandlung aufgrund der Trennung mittels der Schaltvorrichtung vom Inneren des Gasraums getrennt, wodurch eine sehr hohe Prozesssicherheit erreicht wird.

In einer weiteren möglichen Ausgestaltung der Serviceanlage ist diese dazu ausgebildet, mit der Steuereinheit eine Behandlungszeit des Gases während der kontinuierlichen Ausführung des Gasbehandlungsprozesses in Abhängigkeit eines kontinuierlich ermittelten Werts einer Gaseigenschaft zu bestimmen und dynamisch in Abhängigkeit dieses Werts einzustellen. Somit kann die Behandlungszeit in einfacher Weise an die entsprechende Gaseigenschaft angepasst werden und die Anwendung weiter automatisiert werden.

In einer weiteren möglichen Ausgestaltung der Serviceanlage ist diese ausgebildet, mit der Steuereinheit in einem Gasbehandlungsprozess durch einen Anschluss zyklisch Gas aus einem Gasraum zu entnehmen, das Gas zu behandeln und anschließend das behandelte Gas durch den gleichen Anschluss in den Gasraum zurückzuführen. Diese zyklische Gasbehandlung ist sehr wirksam und aufgrund der Trennung mittels der Schaltvorrichtung vom Inneren des Gasraums getrennt, wodurch eine hohe Prozesssicherheit erreicht werden kann.

In einer weiteren möglichen Ausgestaltung der Serviceanlage ist diese ausgebildet, mit der Steuereinheit eine Anzahl von Zyklen der Behandlung des Gases während der zyklischen Ausführung des Gasbehandlungsprozesses in Abhängigkeit eines kontinuierlich ermittelten Werts einer Gaseigenschaft zu bestimmen und dynamisch in Abhängigkeit dieses Werts einzustellen. Somit kann die Anzahl der Zyklen und daraus folgend die Behandlungszeit des Gases in einfacher Weise an die entsprechende Gaseigenschaft angepasst und gesteuert werden. Weiterhin kann über eine Benutzerschnittstelle die ermittelte, voraussichtliche Behandlungszeit angezeigt werden, so dass die Verwendung und Verfügbarkeit der Serviceanlage durch einen Benutzer besser geplant werden kann.

In einer weiteren möglichen Ausgestaltung der Serviceanlage ist diese ausgebildet, mit der Steuereinheit für mehrere Gasräume gleichzeitig einen Gasbehandlungsprozess auszuführen. Hierbei kann eine gleichzeitige Gasbehandlung für mehrere oder alle Gasräume gleichzeitig erfolgen.

In einer weiteren möglichen Ausgestaltung der Serviceanlage ist diese ausgebildet, mit der Steuereinheit während eines Gasbehandlungsprozesses zumindest eine Gaseigenschaft des Gases aus dem Gasraum mit der Sensorvorrichtung fortlaufend zu ermitteln und ermittelte Daten in einer Zeitreihendarstellung mittels einer Benutzerschnittstelle grafisch visualisiert bereitzustellen, wobei die Steuereinheit insbesondere dazu ausgebildet ist, die ermittelten Daten zu extrapolieren und die extrapolierten Daten als prognostizierten Verlauf an die Zeitreihendarstellung angefügt mittels der Benutzerschnittstelle grafisch zu visualisieren. Hierdurch kann eine grafische Livedarstellung einer Zeitreihe für einen Nutzer realisiert werden.

In einer weiteren möglichen Ausgestaltung der Serviceanlage ist diese ausgebildet, mit der Steuereinheit den Gasbehandlungsprozess zyklisch wechselnd in einer festen Abfolge für jeden Gasraum durchzuführen bzw. zu steuern. Eine solche Durchführung des Gasbehandlungsprozesses ist sehr einfach und zuverlässig realisierbar.

In einer weiteren möglichen Ausgestaltung der Serviceanlage ist diese ausgebildet, mit der Steuereinheit eine Reihenfolge und/oder Häufigkeit der Durchführung des Gasbehandlungsprozesses in Abhängigkeit von Istwerten zumindest einer Gaseigenschaft für jeden Gasraum zu bestimmen und zu steuern. Hierdurch kann eine angepasste und für jeden Gasraum individuelle Gasbehandlung ausgeführt werden.

In einer weiteren möglichen Ausgestaltung der Serviceanlage ist diese ausgebildet, mit der Steuereinheit eine Reihenfolge und/oder Häufigkeit der Durchführung des Gasbehandlungsprozesses in Abhängigkeit eines jeweiligen Gasraumvolumens der Gasräume zu bestimmen und zu steuern. Insbesondere erfolgt beispielsweise eine Gasbehandlung bei Gasräumen mit großen Volumina mit einer größeren Häufigkeit als bei Gasräumen mit kleinen Volumina, da hier eine Gasbehandlung aufgrund des größeren Volumens im Allgemeinen aufwändiger bzw. langwieriger ist.

In einer weiteren möglichen Ausgestaltung der Serviceanlage ist diese ausgebildet, mit der Steuereinheit eine Reihenfolge und/oder Häufigkeit der Durchführung des Gasbehandlungsprozesses in Abhängigkeit einer jeweiligen Leckagerate der Gasräume zu bestimmen und zu steuern, wobei die Leckagerate zuvor über ein Logging eines Betriebsdrucks des Gasraums über einen Prüfzeitraum, beispielsweise von 14 Tagen, bestimmt ist. Insbesondere können hierbei die Leckageraten bei der Ermittlung der Wartezeit bis zum nächsten Behandlungszyklus oder auch für die Ermittlung der Reihenfolge der Gasräume zur Gasbehandlung berücksichtigt werden, wodurch die Behandlung effizienter gestaltet werden kann.

In einer weiteren möglichen Ausgestaltung der Serviceanlage ist diese ausgebildet, mit der Steuereinheit eine Reihenfolge und/oder Häufigkeit der Durchführung des Gasbehandlungsprozesses in Abhängigkeit einer vorgewählten Präferenz zu bestimmen und zu steuern. Somit können beispielsweise Gasräume mit einer höheren Präferenz versehen werden, deren Gasbehandlung, beispielsweise aufgrund einer Nutzungshäufigkeit, am Wichtigsten ist.

In einer weiteren möglichen Ausgestaltung der Serviceanlage ist diese ausgebildet, mit der Steuereinheit den Gasbehandlungsprozess bis zum Erreichen eines vorgegebenen Sollwerts zumindest einer Gaseigenschaft durchzuführen und nach Erreichen des Sollwerts den Gasbehandlungsprozess für einen weiteren Gasraum durchzuführen. Hierbei umfasst die Gaseigenschaft eine Gasfeuchte, eine Konzentration von Zersetzungsprodukten und/oder eine Gasreinheit. Diese Gaseigenschaft wird insbesondere durch die Sensorvorrichtung erfasst, beispielsweise durch einen Sensor, der unmittelbar an einem Anschluss bzw. in einem Anschluss am Ende eines Anschlussschlauchs ausgebildet ist. Somit kann die Gasbehandlung besonders einfach und zuverlässig automatisiert erfolgen.

In einer weiteren möglichen Ausgestaltung der Serviceanlage ist diese ausgebildet, mit der Steuereinheit den Gasbehandlungsprozess in einem Gasraum vorzeitig zu unterbrechen, wenn in einem anderen Gasraum ein Grenzwert überschritten wird, und in dem anderen Gasraum eine Notfall-Gasbehandlung einzuleiten. Somit kann die Gasbehandlung in Abhängigkeit einer Erforderlichkeit in einem jeweiligen Gasraum durchgeführt werden, bevor Überschreitungen des Grenzwerts ein vorgegebenes Maß überschreiten.

In einer weiteren möglichen Ausgestaltung der Serviceanlage ist diese ausgebildet, mit der Steuereinheit vor der Durchführung eines Gasbehandlungsprozesses an dem Gasraum eine vorgegebene Wartezeit nach einem an dem gleichen Gasraum zuvor durchgeführten Gasbehandlungsprozesses einzuhalten, um eine vollständige Durchmischung des Gases im Gasraum zu erzielen und zu vermeiden, dass ein Gasvolumen mit einem Großteil an unmittelbar zuvor behandeltem Gas wieder angesaugt und erneut behandelt wird. Somit wird eine gleichmäßige und effektive Behandlung des Gases erzielt.

In einer weiteren möglichen Ausgestaltung der Serviceanlage ist die Steuereinheit ausgebildet, mit der Steuereinheit die Wartezeit in Abhängigkeit eines Volumens des Gasraums einzustellen, wobei die Wartezeit mit wachsendem Volumen wächst, oder die Wartezeit in Abhängigkeit eines Füllstands zumindest eines Filters der Gasbehandlungsvorrichtung einzustellen oder die Wartezeit in Abhängigkeit einer Leckagerate des Gasraums einzustellen, wobei die Leckagerate zuvor über ein Logging eines Betriebsdrucks des Gasraums über einen Prüfzeitraum bestimmt ist. Dies ermöglicht eine genaue Anpassung der Wartezeit an Parameter des Gasraums und/oder der Gasbehandlungsvorrichtung.

In einer weiteren möglichen Ausgestaltung der Serviceanlage ist die Steuereinheit ausgebildet, mit der Steuereinheit die Wartezeit in Abhängigkeit einer Gaseigenschaft eines innerhalb des Gasraums befindlichen Gases einzustellen. Dies ermöglicht eine genaue Anpassung der Wartezeit an die Gaseigenschaft eines innerhalb des Gasraums befindlichen Gases.

In einer weiteren möglichen Ausgestaltung der Serviceanlage ist diese ausgebildet, mit der Steuereinheit den Gasbehandlungsprozess für einen weiteren Gasraum während der einzuhaltenden Wartezeit des vorherigen Gasraums durchzuführen. Somit kann die Wartezeit genutzt werden, um bereits eine Gasbehandlung für einen weiteren Gasraum durchzuführen. Hierdurch können Totzeiten bzw. Leerlaufzeiten vermieden werden und die Gasbehandlung mehrerer Gasräume kann besonders schnell und effizient erfolgen.

In einer weiteren möglichen Ausgestaltung der Serviceanlage ist diese ausgebildet, mit der Steuereinheit vor der Durchführung des Gasbehandlungsprozesses einen Gasdruck innerhalb des Gasraums auf einen Wert oberhalb eines Standardbetriebsdrucks zu erhöhen. Dies ermöglicht, dass ein größeres Gasvolumen zur Gasbehandlung aus dem Gasraum entnommen werden kann, ohne dass ein Gasdruck innerhalb des Gasraums unterhalb eines vorgegebenen minimalen Sollwerts liegt. Somit wird eine Betriebsfähigkeit des Gasraums, insbesondere eines innerhalb des Gasraums angeordneten elektrischen Betriebsmittels, beispielsweise eines Leistungsschalters, auch während der Gasbehandlung bei gleichzeitig großem behandelbaren Gasvolumen sichergestellt.

In einer weiteren möglichen Ausgestaltung der Serviceanlage ist diese ausgebildet, mit der Steuereinheit bei der Durchführung des Gasbehandlungsprozesses ein in den jeweiligen Gasraum zurückgeführtes Gasvolumen von behandeltem Gas derart zu bestimmen und zu steuern, dass ein Gasdruck im Gasraum nach dem vollständigen Zurückführen des Gasvolumens dem Standardbetriebsdruck entspricht und somit die Betriebsfähigkeit des Gasraums, insbesondere des innerhalb des Gasraums angeordneten elektrischen Betriebsmittels, optimiert wird.

In einer weiteren möglichen Ausgestaltung der Serviceanlage ist diese ausgebildet, mit der Steuereinheit bei der Durchführung des Gasbehandlungsprozesses ein aus dem jeweiligen Gasraum entnommenes Gasvolumen derart zu bestimmen und zu steuern, dass ein Gasdruck innerhalb des Gasraums nach vollständiger Entnahme dieses Gasvolumens oberhalb eines vorgegebenen minimalen Sollwerts liegt. Auch hierbei wird die Betriebsfähigkeit des Gasraums, insbesondere des innerhalb des Gasraums angeordneten elektrischen Betriebsmittels, sichergestellt.

In einer weiteren möglichen Ausgestaltung der Serviceanlage umfasst diese eine interne Sensorvorrichtung zur Überwachung mindestens einer Gaseigenschaft des Gases in der Gasbehandlungsvorrichtung, eine Recycling-Einheit zum Austausch und beispielsweise zur Aufbereitung des Gases aus der Gasbehandlungsvorrichtung und eine Fördervorrichtung zur Förderung von Gas aus der Gasbehandlungseinrichtung in die Recycling-Einheit und umgekehrt. Dadurch ist die Serviceanlage in der Lage, weiterführende Gasbehandlungsprozesse auszuführen und die Sicherheit und Funktion ihrer Anwendung zu verbessern.

Bei der Fördervorrichtung kann es sich um die gleiche Vorrichtung handeln, die auch zur Förderung von Gas zwischen einem Gasraum und der Gasbehandlungsreinrichtung eingerichtet ist. Dadurch kann ein besonders kompakter Aufbau erreicht werden. Die Serviceanlage kann zu diesem Zweck jedoch auch eine zweite Fördervorrichtung umfassen, so dass die Gasförderung zwischen dem betreffenden Gasraum und der Gasbehandlungsvorrichtung einerseits und die Gasförderung zwischen der Gasbehandlungsvorrichtung und der Recycling-Einheit andererseits von unterschiedlichen Fördervorrichtungen ausgeführt werden. Insbesondere können eine zweite Fördervorrichtung und die Recycling-Einheit in einem separaten Modul oder einer separaten Anlage untergebracht sein, die mit der Serviceanlage fluidisch verbunden ist. Dadurch kann ein einfacherer Aufbau erzielt werden und die Serviceanlage kann modular konstruiert werden.

In einer weiteren möglichen Ausgestaltung der Serviceanlage kann in der Steuereinheit für zumindest eine Gaseigenschaft des Gases in der Gasbehandlungsvorrichtung ein Grenzwert hinterlegt oder hinterlegbar sein. Die Serviceanlage kann dazu eingerichtet sein, mit der Steuereinheit eine Überschreitung dieses Grenzwerts der Gaseigenschaft des Gases in der Gasbehandlungsvorrichtung während eines Gasbehandlungsprozesses durch die interne Sensorvorrichtung zu überwachen und zu erkennen. Wird eine Überschreitung festgestellt, kann die Serviceanlage mit der Steuereinheit dazu eingerichtet sein, den Gasbehandlungsprozess zu beenden und daraufhin mit einer Fördervorrichtung die Gasbehandlungsvorrichtung zu entleeren, insbesondere zu evakuieren. Anschließend kann das Gas aus der Gasbehandlungsvorrichtung in der Recycling-Einheit wiederaufbereitet oder in einem Lagertank der Recycling-Einheit gelagert werden. Abschließend kann die Serviceanlage mit der Steuereinheit dazu eingerichtet sein, die Gasbehandlungsvorrichtung mit wiederaufbereitetem Gas aus der Recycling-Einheit oder mit reinem Gas aus einem Reingasspeicher der Recycling-Einheit neu zu befüllen, bevor der nächste Gasbehandlungsprozess gestartet wird. Somit kann ein sicherer Betrieb der Serviceanlage verbessert werden und die Serviceanlage ist in der Lage, dauerhaft wirkungsvoll eine Gasbehandlung durchzuführen. Wenn beispielsweise durch eine Überschreitung des Grenzwerts eine Sicherheit oder eine Effektivität der Gasbehandlung gefährdet werden könnte, kann die Serviceanlage dazu eingerichtet sein, automatisch einen kompletten Austausch des im Gerät verbliebenen Gases durchzuführen und damit wieder einen Ausgangszustand herzustellen, durch welchen Sicherheit und Effektivität der Gasbehandlung nicht gefährdet sind.

Unter reinem Gas wird in diesem Kontext insbesondere ein Gas verstanden, in welchem ein Grenzwert einer bestimmten Gaseigenschaft nicht überschritten ist. Es kann sich dabei aber durchaus um ein Mischgas handeln. Rein muss also nicht zwangsläufig bedeuten, dass nur eine einzige Gasspezies vorhanden ist. Um welche Gaseigenschaft es sich handelt und welcher Grenzwert gegeben ist, hängt von der jeweiligen Anwendung ab.

In einer weiteren möglichen Ausgestaltung der Serviceanlage umfasst die Recycling-Einheit einen Partikelfilter oder einen chemischen Filter oder eine Verdichtungseinheit zur Verdichtung und Verflüssigung mindestens einer Komponente des Gases sowie zur Trennung von zumindest einer Flüssigphase und einer Gasphase. Somit wird die Recycling-Einheit in die Lage versetzt, besonders wirkungsvoll das Gas aus der Gasbehandlungsvorrichtung wiederaufzubereiten und ungewünschte Verunreinigungen aus dem System zu entfernen.

In einer weiteren möglichen Ausgestaltung der Serviceanlage ist die interne Sensorvorrichtung ausgebildet, eine Konzentration von Zersetzungsprodukten im Gas in der Gasbehandlungsvorrichtung zu überwachen, wobei der Grenzwert sich auf eine maximal zulässige Konzentration von Zersetzungsprodukten bezieht. Bei Anwendungen mit Schwefelhexafluorid ($SF_6$) als Schutzgas kann die Konzentration von Zersetzungsprodukten beispielsweise ein Volumen-Prozentsatz von Luft und/oder Tetrafluormethan ($CF_4$) im Schutzgasvolumen sein. Nach IEC 60480 beträgt ein Grenzwert für solche Verunreinigungen z. B. drei Volumen-Prozent. In dieser Ausgestaltung kann die Serviceanlage besonders vorteilhaft auch dazu genutzt werden, eine in einem Gasraum vorhandene Konzentration von Zersetzungsprodukten schrittweise zu verringern. Mit jedem Gasbehandlungsprozess findet eine Durchmischung des Gases aus dem Gasraum mit dem in der Gasbehandlungsvorrichtung vorgehaltenen Gas statt. Bei der Durchmischung reduziert sich die Konzentration der Zersetzungsprodukte, da das in der Gasbehandlungsvorrichtung vorgehaltene Gas initial eine niedrigere Konzentration aufweist als das Gas aus dem Gasraum. Die nach einem oder mehreren Gasbehandlungsprozessen in der Gasbehandlungsvorrichtung angereicherte, verbleibende Konzentration von Zersetzungsprodukten kann mit einer Fördereinrichtung und der Recycling-Einheit automatisch in bestimmten Abständen abgebaut, also aus dem System entfernt werden. Somit eignet sich die Serviceanlage beispielsweise zu einer gleichzeitigen Trocknung und Wiederaufbereitung eines Schutzgases aus einem Gasraum, während sich das Betriebsmittel im Gasraum im laufenden Betrieb befinden kann.

In einer weiteren möglichen Ausgestaltung der Serviceanlage sind bzw. ist in der Steuereinheit für jede Gaseigenschaft und jeden Gasraum ein Sollwert und/oder eine zulässige Abweichung von einem Sollwert hinterlegt oder hinterlegbar. Hierdurch kann eine Steuerung der Gasbehandlungsvorrichtung in Abhängigkeit der zumindest einen Gaseigenschaft weiter verbessert und automatisiert werden.

In einer weiteren möglichen Ausgestaltung der Serviceanlage ist die Steuereinheit mit einer Speichervorrichtung gekoppelt oder koppelbar und ausgebildet, den jeweiligen Sollwert und/oder die zulässige Abweichung vom Sollwert aus der Speichervorrichtung auszulesen und einem zugehörigen Gasraum zuzuordnen.

Ebenso kann die Steuereinheit dazu eingerichtet sein, in ihr hinterlegte Sollwerte und/oder zulässige Abweichungen von Sollwerten einer Gaseigenschaft für einen Gasraum in der Speichervorrichtung abzuspeichern.

In einer weiteren möglichen Ausgestaltung der Serviceanlage ist die Steuereinheit ausgebildet, zur Ermittlung des Sollwerts die jeweilige Gaseigenschaft an einem Gasraum über die Sensorvorrichtung initial zu erfassen und als Sollwert zu hinterlegen, und/oder die Steuereinheit ist mit einer Eingabevorrichtung gekoppelt oder umfasst diese, wobei die Eingabevorrichtung zu einer manuellen Eingabe des jeweiligen Sollwerts und/oder als drahtlos verbundenes mobiles Endgerät ausgebildet ist. Durch die initiale Erfassung der Gaseigenschaft zur Ermittlung des Sollwerts kann eine besonders genaue und an eine aktuelle Situation angepasste Ermittlung des Sollwerts erfolgen. Die manuelle Eingabe des jeweiligen Sollwerts ist besonders einfach und zeichnet sich durch eine besonders hohe Zuverlässigkeit aus.

In einer weiteren möglichen Ausgestaltung der Serviceanlage umfasst die Gasbehandlungsvorrichtung eine Trocknungseinheit, welche zur Trocknung des Gases durch Kühlung und Kondensation von Wasserdampf ausgebildet ist. Auch diese Ausgestaltung ermöglicht eine zuverlässige Trocknung des Gases und zeichnet sich durch einen geringen Wartungs- und Betriebsaufwand aus.

In einer weiteren möglichen Ausgestaltung der Serviceanlage ist die Fördervorrichtung ausgebildet, als Gas Schwefelhexafluorid, Stickstoff, Kohlenstoffdioxid, Luft, ein Flournitril, ein Flourketon und/oder eine Mischung aus zumindest zwei der vorgenannten Gase zu fördern, und die Gasbehandlungsvorrichtung ist ausgebildet, als Gas Schwefelhexafluorid, Stickstoff, Kohlenstoffdioxid, Luft, ein Flournitril, ein Flourketon und/oder eine Mischung aus zumindest zwei der vorgenannten Gase zu behandeln. Somit eignet sich die Serviceanlage insbesondere zu einer Gasbehandlung in elektrischen Schaltanlagen, in welchen Schutzgase verwendet werden.

In einer weiteren möglichen Ausgestaltung der Serviceanlage ist diese zur Behandlung von Gasen, welcher unter Überdruck in Gasräumen bevorratet sind, ausgebildet. Somit eignet sich die Serviceanlage insbesondere zu einer Gasbehandlung in elektrischen Schaltanlagen, in welchen das Gas mit Überdruck innerhalb des Gasraums bevorratet ist.

Ausführungsbeispiele der Erfindung werden im Folgenden anhand von Zeichnungen näher erläutert. Darin zeigen:

Figur 1     schematisch eine Serviceanlage für Gasräume und mehrere Gasräume und

Figur 2     schematisch eine Serviceanlage für Gasräume und mehrere Gasräume.

Einander entsprechende Teile sind in allen Figuren mit den gleichen Bezugzeichen versehen.

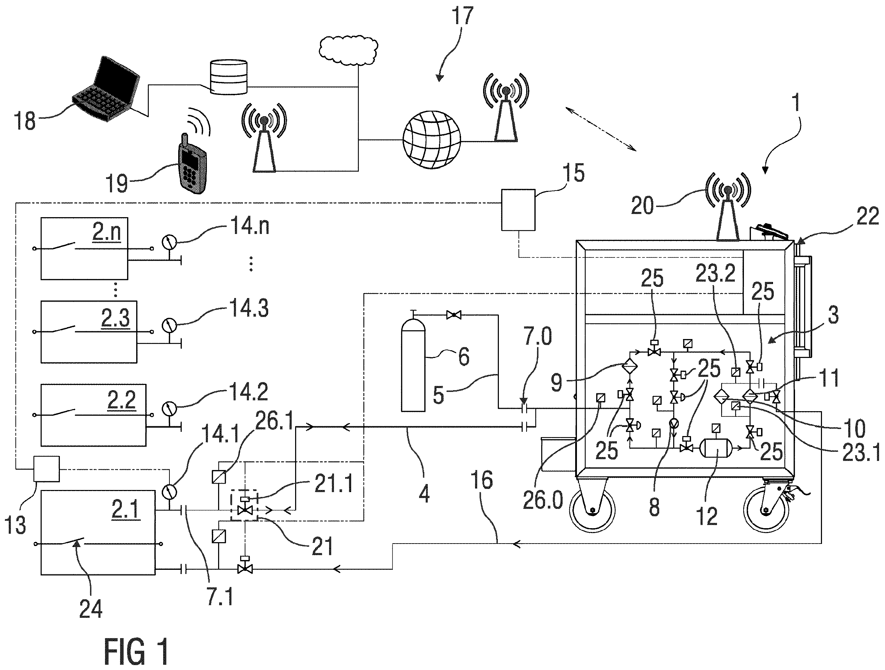

**Figur 1** zeigt schematisch ein mögliches Ausführungsbeispiel einer Serviceanlage 1 für Gasräume 2.1 bis 2.n und mehrere Gasräume 2.1 bis 2.n.

Die Gasräume 2.1 bis 2.n sind beispielsweise Bestandteil einer elektrischen Schaltanlage und bilden beispielsweise jeweils einen Behälter für ein gasisoliertes elektrisches Betriebsmittel 24, wie beispielsweise einen elektrischen Leistungsschalter. Die Gasräume 2.1 bis 2.n sind mit einem Isolier- und Löschgas als Schutzgas, beispielsweise Schwefelhexafluorid, kurz $SF_6$, Stickstoff, Kohlenstoffdioxid, Luft, einem Flournitril, einem Flourketon und/oder einer Mischung aus zumindest zwei der vorgenannten Gase, gefüllt, welches unter einem vorgegebenen Mindestdruck, beispielsweise 6 bar Überdruck, in dem entsprechenden Gasraum 2.1 bis 2.n eingeschlossen ist und eine Löschung eines Lichtbogens bewirkt, welcher zwischen elektrischen Kontakten bei deren Öffnung entsteht. Eine sichere Funktion ist dabei insbesondere von einer Reinheit des Schutzgases und von einem Einschluss des Gases unter einem Druck, der einen vorgegebenen Minimaldruck nicht unterschreitet und einen vorgegebenen Maximaldruck nicht übersteigt, insbesondere von einem Einschluss des Gases unter einem vorgegebenen Nominal- bzw. Betriebsdrucks, abhängig.

Zur Sicherstellung dieser Reinheit umfasst die Serviceanlage 1 eine Gasbehandlungsvorrichtung 3, welche ausgebildet ist, eine Reinigung und/oder eine Trocknung und/oder eine Temperierung des Gases auszuführen. Ferner umfasst die Serviceanlage 1 zumindest eine Steuereinheit 22, welche zumindest einen Teil der Komponenten der Anlage überwacht und steuert.

Die Gasbehandlungsvorrichtung 3 ist über eine erste Gasleitung 4 mit dem Gasraum 2.1 und über eine zweite Gasleitung 5 mit einer Gasflasche 6 gekoppelt, wobei die erste Gasleitung 4 einen Anschluss 7.1 zur Kopplung mit einem Gasraum 2.1 bis 2.n umfasst. Die erste Gasleitung 4 kann insbesondere als Anschlussschlauch ausgebildet sein, welcher als Verbindung zwischen dem Anschluss 7.1 zum Gasraum 2.1 und einem Anschluss 7.0 an der Serviceanlage 1 angeordnet ist.

Die Gasbehandlungsvorrichtung 3 umfasst eine Fördervorrichtung 8 zur Förderung des Gases aus dem Gasraum 2.1 in die Gasbehandlungsvorrichtung 3 und aus der Gasbehandlungsvorrichtung 3 zumindest mittelbar zurück in den Gasraum 2.1. Die Fördervorrichtung 8 ist beispielsweise als Verdichter ausgebildet.

Weiterhin umfasst die Gasbehandlungsvorrichtung 3 eine Trocknungseinheit mit einer Mehrzahl von Trocknungsfiltern 9 bis 11 und/oder Partikelfiltern zur Absorption von Feuchte aus dem Gas. Dabei sind die Trocknungsfilter 10 und 11 abwechselnd nutzbar, so dass während der Nutzung eines Trocknungsfilters 10, 11 der zumindest eine verbleibende Trocknungsfilter 11, 10, in nicht näher dargestellter Weise, z. B. durch Zuführung von warmer Luft, getrocknet werden kann.

Die Gasbehandlungsvorrichtung 3 umfasst zumindest ein Paar von Feuchtesensoren 23.1, 23.2, wobei jeweils ein erster Feuchtesensor 23.1 zumindest mittelbar, beispielsweise unmittelbar, mit einem Eingang des entsprechenden Trocknungsfilters 9 bis 11 gekoppelt ist und jeweils ein zweiter Feuchtesensor 23.2 zumindest mittelbar, beispielsweise unmittelbar, mit einem Ausgang des entsprechenden Trocknungsfilters 9 bis 11 gekoppelt ist. Die Feuchtesensoren 23.1, 23.2 sind mit einer Auswerteeinheit gekoppelt, welche aus mittels der Feuchtesensoren 23.1, 23.2 ermittelten Feuchtewerten einen Füllstand der Trocknungsfilter 9 bis 11 ermittelt und daraus eine erforderliche Verweilzeit des Gases in den Trocknungsfiltern 9 bis 11 und/oder einen Zeitpunkt und eine Zeitdauer zur Trocknung derselben ermittelt.

Alternativ oder zusätzlich zu der Verwendung von Trocknungsfiltern 9 bis 11 ist eine Trocknungseinheit vorgesehen, welche ausgebildet ist, die Trocknung des Gases durch Kühlung und Kondensation von flüssigen Bestandteilen desselben durchzuführen.

Weiterhin umfasst die Gasbehandlungsvorrichtung 3 eine Mehrzahl von Schaltventilen und/oder Druckregelventilen 25. Diese sind derart verschaltet, dass die oben beschrieben Beaufschlagung der Trocknungsfilter 9 bis 11 und ein bidirektionales Fördern des Gases aus dem Gasraum 2.1 in die Gasbehandlungsvorrichtung 3 und aus der Gasbehandlungsvorrichtung 3 zurück in den Gasraum 2.1 mit der Fördervorrichtung 8 möglich sind. Hierzu ist der Anschluss 7.1 in Abhängigkeit einer Förderrichtung als Gaseinlass oder als Gasauslass ausgebildet.

Zur Reinigung, insbesondere Trocknung, des in dem Gasraum 2.1 befindlichen Gases, wird ein Teil desselben insbesondere mit Überdruck in dem Gasraum 2.1 befindliche Gas mittels der Fördervorrichtung 8 in die Gasbehandlungsvorrichtung 3 gefördert und in einem Gasvorratstank 12 gespeichert.

Um dabei weiterhin einen Betrieb des in dem Gasraum 2.1 befindlichen Hochspannungsbetriebsmittels sicherzustellen, wird ein dabei aus dem Gasraum 2.1 entnommenes Gasvolumen derart gewählt, dass ein Gasdruck innerhalb des Gasraums 2.1 nach der Entnahme des Gasvolumens oberhalb eines vorgegebenen minimalen Sollwerts, insbesondere eines vorgegebenen Minimaldrucks, liegt.

In einer möglichen Ausgestaltung umfasst die Serviceanlage 1 eine Sensorvorrichtung mit Sensoren 26.0, 26.1, zur Überwachung mindestens einer Gaseigenschaft. Ein Sensor 26.1 kann beispielsweise dem Anschluss 7.1 zugeordnet sein. Ein weiterer Sensor 26.0 oder mehrere weitere Sensoren kann/können innerhalb der Serviceanlage 1 angeordnet sein. Mit Hilfe der Sensoren 26.0, 26.1 der Sensorvorrichtung kann das Servicegerät den Zustand des Gasraums 2.1 überwachen und einen gefährlichen Zustand frühzeitig erkennen. Dadurch kann das Servicegerät auch genutzt werden, während sich ein im Gasraum 2.1 beherbergtes elektrisches Betriebsmittel 24 im laufenden Betrieb befindet.

In einer möglichen Ausgestaltung bestimmt die Steuereinheit 22 zunächst aus einem Minimaldruck des Gases, einem Nominaldruck des Gases und einem Maximaldruck des Gases zwei Arbeitspunkte, wobei ein erster Arbeitspunkt zwischen dem Minimaldruck und dem Nominaldruck liegt und ein zweiter Arbeitspunkt zwischen dem Nominaldruck und dem Maximaldruck liegt.

Um die in einem Zyklus behandelbare Gasmenge zu erhöhen, wird in einer möglichen Ausgestaltung vor einer Entnahme des Gases aus dem Gasraum 2.1 der Gasdruck innerhalb des Gasraums 2.1 auf einen Wert oberhalb des Nominaldrucks, insbesondere eines Standardbetriebsdrucks, jedoch unterhalb des Maximaldrucks erhöht (beispielsweise auf einen ermittelten zweiten Arbeitspunkt), um anschließend das entnommene Gasvolumen derart zu wählen, dass der Gasdruck innerhalb des Gasraums 2.1 nach der Entnahme des Gasvolumens oberhalb des Minimaldrucks liegt (beispielsweise auf einem ermittelten ersten Arbeitspunkt). Die initiale Erhöhung des Gasdrucks erfolgt beispielsweise anhand von in der Gasflasche 6 bevorratetem Gas oder anhand von Gas, welches bereits im Gasvorratstank 12 gespeichert ist.

In einer möglichen Ausgestaltung der Serviceanlage 1 ist diese dazu eingerichtet, anhand eines Volumens eines Anschlussschlauchs, in welchem der Anschluss 7.1 ausgebildet ist, eines Volumens von Leitungen zwischen dem Anschluss 7.0 an der Serviceanlage 1 und der Gasbehandlungsvorrichtung 3 und eines Volumens des Gasvorratstanks 12 das innere Volumen des Gasraums 2.1 zu ermitteln. Hierzu wird zunächst ein definierter Ausgangszustand innerhalb dieser genannten bekannten Volumina hergestellt, beispielsweise durch ein Evakuieren dieser Volumina, oder der vorliegende Ausgangszustand wird mittels Sensoren 26.0 innerhalb der Serviceanlage 1 ermittelt. Bei der folgenden Entnahme des Gases aus dem Gasraum 2.1 werden in einer möglichen Ausgestaltung die als Anschlussschlauch ausgebildete Gasleitung 4, die Leitungen zwischen dem Anschluss 7.0 und der Gasbehandlungsvorrichtung 3 und der Gasvorratstank 12 nacheinander stufenweise mit dem Gas geflutet. Gleichzeitig wird der Gasdruck innerhalb des Gasraums 2.1 mit Hilfe des Sensors 26.1 überwacht, um das Risiko einer Unterschreitung des Minimaldrucks frühzeitig zu erkennen und zu vermeiden. Gleichzeitig kann der Druckabfall während der stufenweisen Flutung der Volumina der als Anschlussschlauch ausgebildeten Gasleitung 4, der Leitungen und des Gasvorratstanks 12 zur Bestimmung des inneren Volumens des Gasraums 2.1 herangezogen werden, wenn die anderen Volumina bekannt sind.

Anschließend wird das entnommene Gas mittels der Fördervorrichtung 8 in Abhängigkeit zumindest einer zuvor initial ermittelten Gaseigenschaft, beispielsweise der Feuchte, einfach oder mehrfach durch die Trocknungsfilter 10, 11 geleitet, bis ein Sollwert der Gaseigenschaft erreicht ist. Das heißt, die Serviceanlage 1 ist mit der Steuereinheit 22 dazu ausgebildet, eine Anzahl von Zyklen der Behandlung des Gases während einer zyklischen Ausführung des Gasbehandlungsprozesses in Abhängigkeit eines initial ermittelten Werts einer Gaseigenschaft zu bestimmen und einzustellen.

Zur Ermittlung der zumindest einen Gaseigenschaft umfasst die Serviceanlage 1 eine nicht näher dargestellte Sensorvorrichtung, welche zumindest einen zentralen Sensor 26.0 zur Erfassung der zumindest einen Gaseigenschaft umfasst. Auch kann die Sensorvorrichtung mehrere Sensoren 26.0, 26.1 zur Erfassung der zumindest einen Gaseigenschaft oder mehrerer Gaseigenschaften umfassen. Dabei kann der zumindest ein Sensor 26.1 gemeinsam mit dem zugehörigen Anschluss 7.1 in einer als Anschlussschlauch ausgebildeten Gasleitung 4 ausgebildet sein.

Die Sensorvorrichtung ist dabei ausgebildet, als Gaseigenschaft einen Gasdruck und/oder eine Gasdichte und/oder eine Gastemperatur und/oder eine Gasfeuchte und/oder eine Konzentration von Zersetzungsprodukten im Gas zu erfassen, wobei die Gasbehandlung in Abhängigkeit eines oder mehrerer dieser Gaseigenschaften durchgeführt wird.

Hierzu sind bzw. ist in einer möglichen Ausgestaltung der Serviceanlage 1 für jede Gaseigenschaft und jeden Gasraum 2.1 bis 2.n ein Sollwert und/oder eine zulässige Abweichung von einem Sollwert in der Steuereinheit 22 hinterlegt oder hinterlegbar.

In einer möglichen Ausgestaltung ist die Steuereinheit 22 dazu ausgebildet, zur Ermittlung des Sollwerts die jeweilige Gaseigenschaft an einem Gasraum 2.1 bis 2.n initial durch die Sensorvorrichtung zu erfassen und als Sollwert zu hinterlegen. Alternativ oder zusätzlich ist die Steuereinheit 22 mit einer Eingabevorrichtung zu einer manuellen Eingabe des jeweiligen Sollwerts gekoppelt oder umfasst diese.

Auch kann die Steuereinheit 22 mit einer Speichervorrichtung gekoppelt sein oder ist mit dieser koppelbar. Dabei kann die Steuereinheit 22 ausgebildet sein, den jeweiligen Sollwert und/oder die zulässige Abweichung vom Sollwert aus der Speichervorrichtung auszulesen und einem zugehörigen Gasraum 2.1 bis 2.n zuzuordnen.

Weiterhin kann die Sensorvorrichtung oder die Steuereinheit 22 mit zumindest einem im oder am Gasraum 2.1 bis 2.n angeordneten Gasraumsensor 14.1 bis 14.n, welcher Bestandteil der den jeweiligen Gasraum 2.1 bis 2.n umfassenden Anlage, hier der Schaltanlage, ist, zur Erfassung zumindest einer Gaseigenschaft datentechnisch oder elektrisch gekoppelt oder koppelbar sein, wobei die Kopplung über einen Schaltschrank 13 der Anlage erfolgt.

Ein Schaltschrank 13 kann insbesondere mit einem oder mehreren Gasraumsensoren 14.1 bis 14.n gekoppelt sein und diese zentral überwachen. Die Gasraumsensoren 14.1 bis 14.n können insbesondere als Gasdichtewächter ausgebildet sein, welche bei Über- oder Unterschreiten vorgegebener Grenzwerte ein Schaltsignal abgeben, welches beispielsweise zu einer Not-Abschaltung der gesamten Anlage genutzt werden kann.

Weiterhin kann die Steuereinheit 22 mit zumindest einer Gasraumüberwachungseinheit 15 gekoppelt oder koppelbar sein, wobei die Gasraumüberwachungseinheit 15 mit einem Schaltschrank 13 der Anlage oder mit einem im oder am Gasraum 2.1 angeordneten Gasraumsensor 14.1 gekoppelt ist und wobei die Gasraumüberwachungseinheit 15 dazu eingerichtet ist, die Serviceanlage 1 abzuschalten, wenn vom Schaltschrank 13 oder dem Gasraumsensor 14.1 ein gefährlicher Zustand des Gasraums 2.1 signalisiert wird. Ein gefährlicher Zustand kann beispielsweise durch einen Druckabfall unterhalb eines zulässigen Mindestdrucks oder durch die Überschreitung oder Unterschreitung eines anderen Grenzwerts einer Gaseigenschaft gekennzeichnet sein.

Nach der Behandlung des Gases kann das behandelte Gas entweder über die gleiche Gasleitung 4 oder über eine weitere Gasleitung 16 zurück in den Gasraum 2.1 gefördert werden, wobei ein in den Gasraum 2.1 zurückgeführtes Gasvolumen von behandeltem Gas beispielsweise derart gewählt wird, dass ein Gasdruck im Gasraum 2.1 nach dem vollständigen Zurückführen des Gasvolumens dem Standardbetriebsdruck entspricht.

Das heißt, die Serviceanlage 1 kann in einer möglichen Ausgestaltung mit der Steuereinheit 22 dazu eingerichtet sein, die Fördervorrichtung 8 und Gasbehandlungsvorrichtung 3 derart zu steuern, dass in einem Gasbehandlungsprozess durch den Anschluss 7.1 zyklisch Gas aus dem Gasraum 2.1 entnommen, das Gas behandelt und anschließend das behandelte Gas durch den gleichen Anschluss 7.1 in den Gasraum 2.1 zurückgeführt wird.

Um eine homogene Behandlung des Gases zu ermöglichen und zu vermeiden, dass unmittelbar zuvor behandeltes Gas sofort wieder zur Behandlung in die Gasbehandlungsvorrichtung 3 gefördert wird, wird vor der Durchführung eines neuen Gasbehandlungsprozesses in dem Gasraum 2.1 eine vorgegebenen Wartezeit seit einem in dem gleichen Gasraum 2.1 zuvor durchgeführten Gasbehandlungsprozess eingehalten. Dabei wird die Wartezeit beispielsweise in Abhängigkeit eines Volumens des

Gasraums 2.1 durch die Steuereinheit 22 eingestellt, wobei die Wartezeit mit wachsendem Volumen wächst. Alternativ wird die Wartezeit in Abhängigkeit eines Füllstands zumindest eines Filters, beispielsweise eines Trocknungsfilters 9 bis 11, der Gasbehandlungsvorrichtung 3 eingestellt. Alternativ wird die Wartezeit in Abhängigkeit einer Leckagerate des Gasraums 2.1 eingestellt, wobei die Leckagerate zuvor über ein Logging eines Betriebsdrucks des Gasraums 2.1 über einen Prüfzeitraum, beispielsweise einen Zeitraum von 14 Tagen, bestimmt wird.

Zu einem Datenaustausch mit zumindest einer externen Datenverarbeitungseinheit 17 und mit dieser gekoppelten Endgeräte 18, 19 umfasst die Serviceanlage 1 zumindest eine entsprechende Kommunikationsschnittstelle 20.

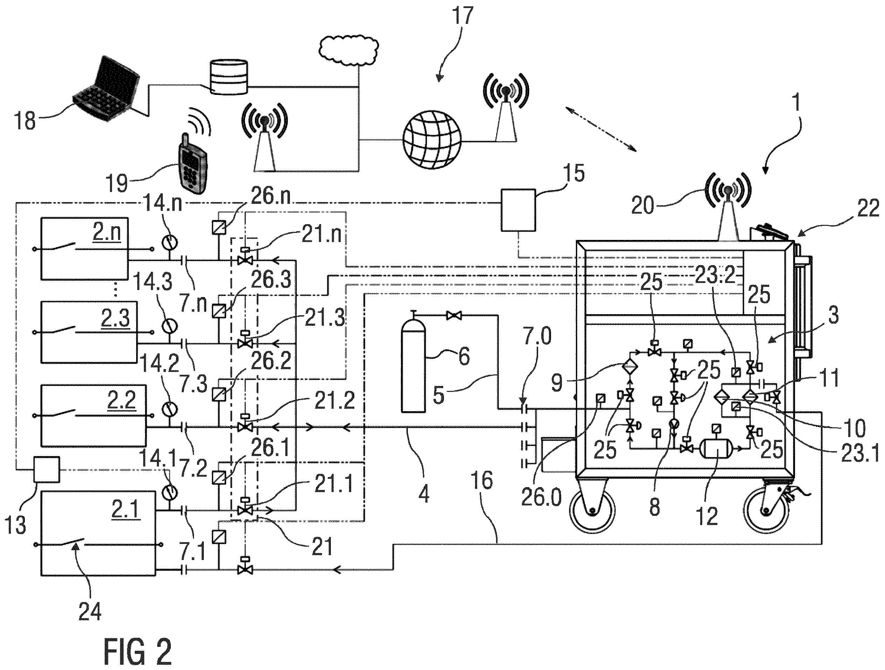

In **Figur 2** ist schematisch ein mögliches weiteres Ausführungsbeispiel einer Serviceanlage 1 für Gasräume 2.1 bis 2.n und mehrere Gasräume 2.1 bis 2.n gezeigt.

Im Unterschied zu dem in Figur 1 dargestellten Ausführungsbeispiel umfasst die Serviceanlage 1 mehrere mit der Gasbehandlungsvorrichtung 3 und der zumindest einen Sensorvorrichtung gekoppelte Anschlüsse 7.1 bis 7.n, wobei jeder Anschluss 7.1 bis 7.n zur Kopplung mit jeweils zumindest einem Gasraum 2.1 bis 2.n ausgebildet ist.

Weiterhin umfasst die Serviceanlage 1 eine Schaltvorrichtung 21 zu einer Schaltung zumindest eines, im dargestellten Ausführungsbeispiel mehrerer dezentraler Schaltelemente 21.1 bis 21.n, zum Öffnen und Schließen der Anschlüsse 7.1 bis 7.n. Alternativ kann auch ein zentrales Schaltelement vorgesehen sein.

Die Schaltvorrichtung 21 ist steuerungstechnisch verbunden mit der Steuereinheit 22, welche zu einer automatischen Ansteuerung der Schaltelemente 21.1 bis 21.n ausgebildet ist.

Die dezentralen Schaltelemente 21.1 bis 21.n sind jeweils mit einem Anschluss 7.1 bis 7.n gekoppelt und zu einem Öffnen und Schließen des entsprechenden Anschlusses 7.1 bis 7.n ausgebildet. Dabei sind die dezentralen Schaltelemente 21.1 bis 21.n beispielsweise unmittelbar am jeweils zugehörigen Anschluss 7.1 bis 7.n angeordnet und gemeinsam mit dem zugehörigen Anschluss 7.1 bis 7.n in einem Anschlussschlauch bzw. am Ende eines Anschlussschlauchs ausgebildet.

In einer möglichen Ausgestaltung sind auch dezentrale Sensoren 26.1 bis 26.n der Sensorvorrichtung unmittelbar am jeweils zugehörigen Anschluss 7.1 bis 7.n angeordnet und beispielsweise gemeinsam mit dem zugehörigen Anschluss 7.1 bis 7.n sowie dem zugehörigen Schaltelement 21.1 bis 21.n in einem Anschlussschlauch bzw. am Ende eines Anschlussschlauchs ausgebildet.

Die Gasbehandlung erfolgt für jeden einzelnen Gasraum 2.1 bis 2.n analog zu der Beschreibung zu dem in Figur 1 dargestellten Ausführungsbeispiel, wobei die Gasräume 2.1 bis 2.n jedoch insbesondere dauerhaft, das heißt zumindest für eine Behandlungszeit, mit der Serviceanlage 1 gleichzeitig gekoppelt sind. Diese Kopplung kann insbesondere über eine Mehrzahl von Anschlussschläuchen erfolgen, wobei mindestens ein Anschlussschlauch pro Gasraum 2.1 bis 2.n verwendet wird. Zur Verbindung der Anschlussschläuche kann eine Mehrzahl von Anschlüssen 7.0 an der Serviceanlage 1 vorgesehen sein.

Im Unterschied zu dem in Figur 1 dargestellten Ausführungsbeispiel ist die Serviceanlage 1 mit der Steuereinheit 22 zusätzlich dazu ausgebildet, die Fördervorrichtung 8, die Schaltvorrichtung 21 und die Gasbehandlungsvorrichtung 3 derart zu steuern, so dass der Gasbehandlungsprozess zyklisch wechselnd in einer festgelegten Abfolge für jeden Gasraum 2.1 bis 2.n durchgeführt wird.

Dabei kann eine Reihenfolge und/oder Häufigkeit der Durchführung des Gasbehandlungsprozesses in Abhängigkeit von Istwerten zumindest einer Gaseigenschaft für jeden Gasraum 2.1 bis 2.n durch die Steuereinheit 22 festgelegt und gesteuert werden. Alternativ oder zusätzlich erfolgt die Steuerung der Reihenfolge und/oder Häufigkeit der Durchführung des Gasbehandlungsprozesses in Abhängigkeit des jeweiligen Gasraumvolumens der Gasräume 2.1 bis 2.n.

Alternativ oder zusätzlich erfolgt die Steuerung der Reihenfolge und/oder Häufigkeit der Durchführung des Gasbehandlungsprozesses weiterhin in Abhängigkeit der jeweiligen Leckagerate der Gasräume 2.1 bis 2.n und/oder in Abhängigkeit einer vorgewählten Präferenz.

Weiterhin erfolgt die Gasbehandlung insbesondere bis zum Erreichen eines vorgegebenen Sollwerts zumindest einer Gaseigenschaft, wobei nach Erreichen des Sollwerts der Gasbehandlungsprozess für einen weiteren Gasraum 2.1 bis 2.n durchgeführt werden kann.

Beispielsweise erfolgt die Durchführung des Gasbehandlungsprozesses für den weiteren Gasraum 2.1 bis 2.n während der einzuhaltenden Wartezeit des vorherigen Gasraums 2.1 bis 2.n.

## BEZUGSZEICHENLISTE

| | |
|---|---|
| 1 | Serviceanlage |
| 2.1 bis 2.n | Gasraum |
| 3 | Gasbehandlungsvorrichtung |
| 4 | Gasleitung |
| 5 | Gasleitung |
| 6 | Gasflasche |
| 7.0 bis 7.n | Anschluss |
| 8 | Fördervorrichtung |
| 9 bis 11 | Trocknungsfilter |
| 12 | Gasvorratstank |
| 13 | Schaltschrank |
| 14.1 bis 14.n | Gasraumsensor |
| 15 | Gasraumüberwachungseinheit |
| 16 | Gasleitung |
| 17 | Datenverarbeitungseinheit |
| 18 | Endgerät |
| 19 | Endgerät |
| 20 | Kommunikationsschnittstelle |
| 21 | Schaltvorrichtung |
| 21.1 bis 21.n | Schaltelement |
| 22 | Steuereinheit |
| 23.1 bis 23.2 | Feuchtesensor |
| 24 | Elektrisches Betriebsmittel |
| 25 | Schalt- und/oder Druckregelventil |
| 26.0 bis 26.n | Sensor |

**Patentansprüche**

1. Serviceanlage (1) für Gasräume (2.1 bis 2.n) mit

   - einer Gasbehandlungsvorrichtung (3) zum Behandeln eines in zumindest einem Gasraum (2.1 bis 2.n) vorhandenen Gases, wobei die Gasbehandlungsvorrichtung (3) ausgebildet ist, eine Reinigung und/oder eine Trocknung und/oder eine Temperierung des Gases auszuführen,
   - zumindest einer Sensorvorrichtung zur Überwachung zumindest einer Gaseigenschaft des Gases, wobei die Sensorvorrichtung ausgebildet ist, als Gaseigenschaft einen Gasdruck und/oder eine Gasdichte und/oder eine Gastemperatur und/oder eine Gasfeuchte und/oder eine Konzentration von Zersetzungsprodukten im Gas zu erfassen,
   - zumindest einem mit der Gasbehandlungsvorrichtung (3) und der zumindest einen Sensorvorrichtung gekoppelten Anschluss (7.1 bis 7.n), welcher zur Kopplung mit dem Gasraum (2.1 bis 2.n) ausgebildet ist,
   - zumindest einer Fördervorrichtung (8) zur Förderung eines Gases aus dem Gasraum (2.1 bis 2.n) in die Gasbehandlungsvorrichtung (3) und aus der Gasbehandlungsvorrichtung (3) zumindest mittelbar zurück in den Gasraum (2.1 bis 2.n) und
   - zumindest einer Steuereinheit (22), welche zumindest mit der Sensorvorrichtung verbunden ist und zumindest die Fördervorrichtung (8) und/oder die Gasbehandlungsvorrichtung (3) überwacht und steuert.

2. Serviceanlage (1) nach Anspruch 1, wobei die Serviceanlage (1) dazu ausgebildet ist, mit der Steuereinheit (22)
   ein Gasvolumen in einem verbundenen Gasraum (2.1 bis 2.n) anhand

   - eines Volumens von Leitungen zwischen dem Anschluss (7.1 bis 7.n) und der Gasbehandlungsvorrichtung (3) und/oder
   - eines Volumens eines Anschlussschlauchs (4), in welchem der Anschluss (7.1 bis 7.n) ausgebildet ist, und/oder
   - eines Volumens eines Gasvorratstanks (12) der Gasbehandlungsvorrichtung (3) zu ermitteln,
   und weiterhin
   - den Anschlussschlauch, die Leitungen zwischen dem Anschluss (7.1 bis 7.n) und der Gasbehandlungsvorrichtung (3) und den Gasvorratstank (12) bei der Entnahme des Gases aus dem Gasraum (2.1 bis 2.n) nacheinander stufenweise mit Gas zu fluten und gleichzeitig den Gasdruck innerhalb des Gasraums (2.1 bis 2.n) zu überwachen
   oder
   - den Gasraum (2.1 bis 2.n) bei einer Entnahme des Gases aus dem Anschlussschlauch, den Leitungen zwischen dem Anschluss (7.1 bis 7.n) und der Gasbehandlungsvorrichtung (3) und dem Gasvorratstank (12) mit dem entnommenen Gas zu fluten und gleichzeitig den Gasdruck innerhalb des Gasraums (2.1 bis 2.n) zu überwachen und
   - anhand einer bei der Überwachung des Gasdrucks innerhalb des Gasraums (2.1 bis 2.n) ermittelten Druckveränderung das Gasvolumen in dem Gasraum (2.1 bis 2.n) zu ermitteln.

3. Serviceanlage (1) nach Anspruch 1 oder 2, wobei die Serviceanlage (1) dazu ausgebildet ist, mit der Steuereinheit (22)

   - aus einem Minimaldruck des Gases, einem Nominaldruck des Gases und einem Maximaldruck des Gases einen unteren ersten Arbeitspunkt und einen oberen zweiten Arbeitspunkt zu bestimmen,
   - den Gasbehandlungsprozess automatisch mit einem Einbringen von frischem Gas in den Gasraum (2.1 bis 2.n) bis zum Erreichen des oberen zweiten Arbeitspunkts zu starten, wenn der Nominaldruck näher am unteren ersten Arbeitspunkt als am oberen zweiten Arbeitspunkt liegt,
   - den Gasbehandlungsprozess automatisch mit einer Entnahme von Gas aus dem Gasraum (2.1 bis 2.n) bis zum Erreichen des unteren ersten Arbeitspunkts zu starten, wenn der Nominaldruck näher am oberen zweiten Arbeitspunkt als am unteren ersten Arbeitspunkt liegt und/oder
   - bei der Durchführung des Gasbehandlungsprozesses ein aus dem jeweiligen Gasraum (2.1 bis 2.n) entnommenes Gasvolumen derart zu wählen, dass ein Gasdruck innerhalb des Gasraums (2.1 bis 2.n) nach der Entnahme des Gasvolumens oberhalb des Minimaldrucks liegt.

4. Serviceanlage (1) nach Anspruch 3, wobei die Serviceanlage (1) dazu ausgebildet ist, mit der Steuereinheit (22) anhand der Arbeitspunkte zu ermitteln, ob der Gasbehandlungsprozess durchgeführt werden kann, indem die Serviceanlage (1) dann, wenn

   - der erste untere Arbeitspunkt größer als der Nominaldruck ist, den Gasbehandlungsprozess nur dann starten kann, wenn eine Nutzerbestätigung erfolgt, dass der untere erste Arbeitspunkt mit dem Nominaldruck gleichgesetzt wird,
   - der obere zweite Arbeitspunkt kleiner als der Nominaldruck ist, den Gasbehandlungsprozess nur dann starten kann, wenn eine Nutzerbestätigung erfolgt, dass der obere zweite Arbeitspunkt mit dem Nominaldruck gleichgesetzt wird, und

- wenn beide Arbeitspunkte auf dem gleichen Wert liegen oder der obere zweite Arbeitspunkt niedriger ist als der untere erste Arbeitspunkt, den Gasbehandlungsprozess abbricht.

5. Serviceanlage (1) nach einem der vorhergehenden Ansprüche, wobei

- die Gasbehandlungsvorrichtung (3) zumindest einen Trocknungsfilter (9 bis 11) zur Absorption von Feuchte umfasst und/oder
- die Gasbehandlungsvorrichtung (3) zumindest zwei
Feuchtesensoren (23.1 bis 23.2) umfasst,

- ein erster Feuchtesensor (23.1) zumindest mittelbar mit einem Eingang des zumindest einen Trocknungsfilters (9 bis 11) gekoppelt ist,
- ein zweiter Feuchtesensor (23.2) zumindest mittelbar mit einem Ausgang des zumindest einen Trocknungsfilters (9 bis 11) gekoppelt ist und
- die Feuchtesensoren (23.1 bis 23.2) zumindest mit der Steuereinheit (22) gekoppelt sind, welche aus mittels der Feuchtesensoren (23.1 bis 23.2) ermittelten Feuchtewerten einen Füllstand des zumindest einen Trocknungsfilters (9 bis 11) ermittelt.

6. Serviceanlage (1) nach einem der vorhergehenden Ansprüche, wobei

- die Sensorvorrichtung oder die Steuereinheit (22) mit zumindest einem im oder am Gasraum (2.1 bis 2.n) angeordneten Gasraumsensor (14.1 bis 14.n), welcher Bestandteil einer den jeweiligen Gasraum (2.1 bis 2.n) umfassenden Anlage ist, zur Erfassung zumindest einer Gaseigenschaft datentechnisch oder elektrisch gekoppelt oder koppelbar ist, wobei die Kopplung insbesondere über einen Schaltschrank (13) der Anlage erfolgt, und/oder
- die Steuereinheit (22) mit zumindest einer Gasraumüberwachungseinheit (15) gekoppelt oder koppelbar ist, wobei die Gasraumüberwachungseinheit (15) mit einem Schaltschrank (13) der Anlage oder mit einem im oder am Gasraum (2.1 bis 2.n) angeordneten Gasraumsensor (14.1 bis 14.n) gekoppelt ist und wobei die Gasraumüberwachungseinheit (15) dazu ausgebildet ist, die Serviceanlage (1) abzuschalten, wenn vom Schaltschrank (13) oder dem Gasraumsensor (14.1 bis 14.n) ein gefährlicher Zustand des Gasraums (2.1 bis 2.n) signalisiert wird.

7. Serviceanlage (1) nach einem der vorhergehenden Ansprüche, umfassend

- zumindest zwei mit der Gasbehandlungsvorrichtung (3) und der zumindest einen Sensorvorrichtung gekoppelte Anschlüsse (7.1 bis 7.n), wobei jeder Anschluss (7.1 bis 7.n) zur Kopplung mit jeweils zumindest einem Gasraum (2.1 bis 2.n) ausgebildet ist, und
- eine Schaltvorrichtung (21) zu einer Schaltung zumindest eines Schaltelements (21.1 bis 21.n) zum Öffnen und Schließen der Anschlüsse (7.1 bis 7.n), wobei die Schaltvorrichtung (21) mit der Steuereinheit (22) verbunden ist, wobei die Steuereinheit (22) zu einer automatischen Ansteuerung des zumindest einen Schaltelements (21.1 bis 21.n) ausgebildet ist.

8. Serviceanlage (1) nach Anspruch 7, wobei die Schaltvorrichtung (21) mehrere dezentrale Schaltelemente (21.1 bis 21.n) umfasst, welche

- jeweils mit einem Anschluss (7.1 bis 7.n) gekoppelt sind und zu einem Öffnen und Schließen des entsprechenden Anschlusses (7.1 bis 7.n) ausgebildet sind und/oder
- unmittelbar am jeweils zugehörigen Anschluss (7.1 bis 7.n) angeordnet sind und/oder
- jeweils mit ihrem zugehörigen Anschluss (7.1 bis 7.n) in einem Anschlussschlauch ausgebildet sind.

9. Serviceanlage (1) nach einem der vorhergehenden Ansprüche, wobei die Sensorvorrichtung mehrere dezentrale Sensoren (26.0 bis 26.n) zur Erfassung der zumindest einen Gaseigenschaft umfasst, wobei die dezentralen Sensoren (26.0 bis 26.n)

- jeweils mit einem Anschluss (7.1 bis 7.n) gekoppelt sind und/oder
- an jedem Anschluss (7.1 bis 7.n) ausgebildet sind, als Gaseigenschaft zumindest einen Gasdruck und/oder eine Gasdichte zu erfassen und/oder
- unmittelbar am jeweils zugehörigen Anschluss (7.1 bis 7.n) angeordnet sind und/oder
- jeweils mit ihrem zugehörigen Anschluss (7.1 bis 7.n) in einem Anschlussschlauch ausgebildet sind.

10. Serviceanlage (1) nach einem der vorhergehenden Ansprüche, wobei

- jeder Anschluss (7.1 bis 7.n) einen separaten Gaseinlass und einen separaten Gasauslass umfasst und die Fördervorrichtung (8) und die Gasbehandlungsvorrichtung (3) zu einer kontinuierlichen Ausführung eines Gasbehandlungsprozesses ausgebildet sind, in welchem kontinuierlich Gas aus einem Gasraum (2.1 bis 2.n) entnommen wird, das Gas behandelt wird und das behandelte Gas in den Gasraum (2.1 bis 2.n) zurückgeführt wird, wobei die Serviceanlage (1) insbesondere dazu ausgebildet ist, mit der Steuereinheit (22) eine Behandlungszeit des Gases während der kontinuierlichen Ausführung des Gasbehandlungsprozesses in Abhängigkeit eines kontinuierlich ermittelten Werts einer Gaseigenschaft zu bestimmen und dynamisch in Abhängigkeit dieses Werts einzustellen, und/oder

- die Serviceanlage (1) mit der Steuereinheit (22) dazu ausgebildet ist, in einem Gasbehandlungsprozess durch einen Anschluss (7.1 bis 7.n) zyklisch Gas aus einem Gasraum (2.1 bis 2.n) zu entnehmen, das Gas zu behandeln und anschließend das behandelte Gas durch den gleichen Anschluss (7.1 bis 7.n) in den Gasraum (2.1 bis 2.n) zurückzuführen, wobei die Steuereinheit (22) insbesondere ausgebildet ist, eine Anzahl von Zyklen der Behandlung des Gases während der zyklischen Ausführung des Gasbehandlungsprozesses in Abhängigkeit eines kontinuierlich ermittelten Werts einer Gaseigenschaft zu bestimmen und dynamisch in Abhängigkeit dieses Werts einzustellen, und/oder

- die Serviceanlage (1) mit der Steuereinheit (22) dazu ausgebildet ist, während eines Gasbehandlungsprozesses zumindest eine Gaseigenschaft des Gases aus dem Gasraum (2.1 bis 2.n) mit der Sensorvorrichtung fortlaufend zu ermitteln und ermittelte Daten in einer Zeitreihendarstellung mittels einer Benutzerschnittstelle grafisch visualisiert bereitzustellen, wobei die Steuereinheit (22) insbesondere dazu ausgebildet ist, die ermittelten Daten zu extrapolieren und die extrapolierten Daten als prognostizierten Verlauf an die Zeitreihendarstellung angefügt mittels der Benutzerschnittstelle grafisch zu visualisieren.

11. Serviceanlage (1) nach einem der vorhergehenden Ansprüche, wobei

- die Steuereinheit (22) ausgebildet ist, den Gasbehandlungsprozess zyklisch wechselnd in einer festen Abfolge für jeden Gasraum (2.1 bis 2.n) durchzuführen, und/oder
- die Serviceanlage (1) dazu ausgebildet ist, mit der Steuereinheit (22) eine Reihenfolge und/oder Häufigkeit der Durchführung des Gasbehandlungsprozesses

- in Abhängigkeit von Istwerten zumindest einer Gaseigenschaft für jeden Gasraum (2.1 bis 2.n) oder
- in Abhängigkeit eines jeweiligen Gasraumvolumens der Gasräume (2.1 bis 2.n) oder
- in Abhängigkeit einer jeweiligen Leckagerate der Gasräume (2.1 bis 2.n), wobei die Leckagerate zuvor über ein Logging eines Betriebsdrucks des Gasraums (2.1 bis 2.n) über einen Prüfzeitraum bestimmt ist, oder
- in Abhängigkeit einer vorgewählten Präferenz

zu bestimmen und zu steuern, und/oder

- die Serviceanlage (1) ausgebildet ist, mit der Steuereinheit (22) den Gasbehandlungsprozess bis zum Erreichen eines vorgegebenen Sollwerts zumindest einer Gaseigenschaft durchzuführen und nach Erreichen des Sollwerts den Gasbehandlungsprozess für einen weiteren Gasraum (2.1 bis 2.n) durchzuführen, wobei die Gaseigenschaft eine Gasfeuchte, eine Konzentration von Zersetzungsprodukten und/oder eine Gasreinheit umfasst, und/oder

- die Serviceanlage (1) ausgebildet ist, mit der Steuereinheit (22) den Gasbehandlungsprozess in einem Gasraum (2.1 bis 2.n) vorzeitig zu unterbrechen, wenn in einem anderen Gasraum (2.1 bis 2.n) ein Grenzwert überschritten wird, und in dem anderen Gasraum (2.1 bis 2.n) eine Notfall-Gasbehandlung einzuleiten.

12. Serviceanlage (1) nach einem der vorhergehenden Ansprüche, wobei die Serviceanlage (1) weiterhin dazu ausgebildet ist,

- mit der Steuereinheit (22) vor der Durchführung eines Gasbehandlungsprozesses in dem Gasraum (2.1 bis 2.n) eine vorgegebenen Wartezeit eines in dem gleichen Gasraum (2.1 bis 2.n) zuvor durchgeführten Gasbehandlungsprozesses einzuhalten, und insbesondere
- mit der Steuereinheit (22) die Wartezeit in Abhängigkeit eines Volumens des Gasraums (2.1 bis 2.n) einzustellen, wobei die Wartezeit mit wachsendem Volumen wächst, oder
- mit der Steuereinheit (22) die Wartezeit in Abhängigkeit eines Füllstands zumindest eines Filters der Gasbehandlungsvorrichtung (3) einzustellen oder
- mit der Steuereinheit (22) die Wartezeit in Abhängigkeit einer Leckagerate des Gasraums (2.1 bis 2.n) einzustellen, wobei die Leckagerate zuvor über ein Logging eines Betriebsdrucks des Gasraums (2.1 bis 2.n) über einen Prüfzeitraum bestimmt ist, oder
- mit der Steuereinheit (22) die Wartezeit in Abhängigkeit einer Gaseigenschaft eines innerhalb des Gasraums (2.1 bis 2.n) befindlichen Gases einzustellen und/oder

- den Gasbehandlungsprozess für einen weiteren Gasraum (2.1 bis 2.n) während der einzuhaltenden Wartezeit des vorherigen Gasraums (2.1 bis 2.n) durchzuführen.

13. Serviceanlage (1) nach einem der vorhergehenden Ansprüche, wobei

- die Serviceanlage (1) dazu ausgebildet ist, vor der Durchführung des Gasbehandlungsprozesses einen Gasdruck innerhalb des Gasraums (2.1 bis 2.n) auf einen Wert oberhalb eines Standardbetriebsdrucks zu erhöhen,
- die Serviceanlage (1) insbesondere dazu ausgebildet ist, mit der Steuereinheit (22) bei der Durchführung des Gasbehandlungsprozesses ein in den jeweiligen Gasraum (2.1 bis 2.n) zurückgeführtes Gasvolumen von behandeltem Gas derart zu bestimmen und zu steuern, dass ein Gasdruck im Gasraum (2.1 bis 2.n) nach dem vollständigen Zurückführen des Gasvolumens dem Standardbetriebsdruck entspricht, und
- die Serviceanlage (1) insbesondere dazu ausgebildet ist, mit der Steuereinheit (22) bei der Durchführung des Gasbehandlungsprozesses ein aus dem jeweiligen Gasraum (2.1 bis 2.n) entnommenes Gasvolumen derart zu bestimmen und einzustellen, dass ein Gasdruck innerhalb des Gasraums (2.1 bis 2.n) nach der Entnahme des Gasvolumens oberhalb eines vorgegebenen minimalen Sollwerts liegt.

14. Serviceanlage (1) nach einem der vorhergehenden Ansprüche, umfassend

- eine interne Sensorvorrichtung zur Überwachung mindestens einer Gaseigenschaft des Gases in der Gasbehandlungsvorrichtung (3),
- eine Recycling-Einheit zum Austausch von Gas aus der Gasbehandlungsvorrichtung (3) und
- eine Fördervorrichtung (8) zur Förderung von Gas aus der Gasbehandlungseinrichtung in die Recycling-Einheit und umgekehrt, wobei
- in der Steuereinheit (22) für zumindest eine Gaseigenschaft des Gases in der Gasbehandlungsvorrichtung (3) ein Grenzwert hinterlegt oder hinterlegbar ist, wobei
- die Serviceanlage (1) insbesondere dazu ausgebildet ist, mit der Steuereinheit (22) eine Überschreitung des Grenzwerts der Gaseigenschaft des Gases in der Gasbehandlungsvorrichtung (3) während eines Gasbehandlungsprozesses durch die interne Sensorvorrichtung zu erkennen, und bei einer erkannten Grenzwertüberschreitung

- nach dem Ende des Gasbehandlungsprozesses mit der Fördervorrichtung (8) die Gasbehandlungsvorrichtung (3) zu entleeren, insbesondere zu evakuieren,
- das Gas aus der Gasbehandlungsvorrichtung (3) in der Recycling-Einheit wiederaufzubereiten oder in einem Lagertank zu lagern und
- die Gasbehandlungsvorrichtung (3) mit wiederaufbereitetem Gas aus der Recycling-Einheit oder mit reinem Gas aus einem Reingasspeicher neu zu befüllen, bevor der nächste Gasbehandlungsprozess gestartet wird,
wobei

- die interne Sensorvorrichtung insbesondere dazu ausgebildet ist, eine Konzentration von Zersetzungsprodukten im Gas in der Gasbehandlungsvorrichtung (3) zu überwachen und der Grenzwert eine maximal zulässige Konzentration von Zersetzungsprodukten ist.

15. Serviceanlage (1) nach einem der vorhergehenden Ansprüche, wobei

- in der Steuereinheit (22) für jede Gaseigenschaft und jeden Gasraum (2.1 bis 2.n) ein Sollwert und/oder eine zulässige Abweichung von einem Sollwert hinterlegt oder hinterlegbar sind bzw. ist und/oder
- die Steuereinheit (22) mit einer Speichervorrichtung gekoppelt oder koppelbar ist und
- die Steuereinheit (22) ausgebildet ist, den jeweiligen Sollwert und/oder die zulässige Abweichung von einem Sollwert aus der Speichervorrichtung auszulesen und einem zugehörigen Gasraum (2.1 bis 2.n) zuzuordnen.

16. Serviceanlage (1) nach Anspruch 15, wobei

- die Steuereinheit (22) ausgebildet ist, zur Ermittlung des Sollwerts die jeweilige Gaseigenschaft an einem Gasraum (2.1 bis 2.n) über die Sensorvorrichtung initial zu erfassen und als Sollwert zu hinterlegen, und/oder
- mit einer Eingabevorrichtung gekoppelt ist oder diese umfasst, wobei die Eingabevorrichtung zu einer manuellen Eingabe des jeweiligen Sollwerts und/oder als drahtlos verbundenes mobiles Endgerät (18, 19) ausgebildet ist.

17. Serviceanlage (1) nach einem der vorhergehenden Ansprüche, wobei die Gasbehandlungsvorrichtung (3) eine Trocknungseinheit umfasst, welche zur Trocknung des Gases durch Kühlung und Kondensation des Wasserdampfs ausgebildet ist.

18. Serviceanlage (1) nach einem der vorhergehenden Ansprüche, wobei

- die Fördervorrichtung (8) ausgebildet ist, als Gas Schwefelhexafluorid, Stickstoff, Kohlenstoffdioxid, Luft, ein Flournitril, ein Flourketon und/oder eine Mischung aus zumindest zwei der vorgenannten Gase zu fördern, und
- die Gasbehandlungsvorrichtung (3) ausgebildet ist, als Gas Schwefelhexafluorid, Stickstoff, Kohlenstoffdioxid, Luft, ein Flournitril, ein Flourketon und/oder eine Mischung aus zumindest zwei der vorgenannten Gase zu behandeln.

FIG 1

FIG 2

**Europäisches Patentamt**
**European Patent Office**
**Office européen des brevets**

# EUROPÄISCHER RECHERCHENBERICHT

**Nummer der Anmeldung**

EP 20 21 3258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/165996 A1 (RWE DEUTSCHLAND AG [DE]) 20. Oktober 2016 (2016-10-20) * Anspruch 1; Abbildung 1 * * Seite 7, Zeilen 22-25 * * Seite 11, Zeilen 21-25 * * Seite 10, Zeilen 27-29 * | 1,3-18 | INV. B01D53/26 B01D53/30 H01H33/56 H02B13/055 |
| X,D | & EP 3 283 833 B1 (INNOGY NETZE DEUTSCHLAND GMBH [DE]) 13. März 2019 (2019-03-13) * Anspruch 1; Abbildung 1 * ----- | 1,3-18 | |
| X | EP 0 885 841 A1 (HITACHI ENG SERVICE [JP]; SHOWA DENKO KK [JP]) 23. Dezember 1998 (1998-12-23) * Anspruch 1; Abbildung 1 * * Seite 7, Zeilen 25-33 * ----- | 1,18 | |
| X | CN 107 774 100 A (EXAMING & EXPERIMENTAL CT ULTRAHIGH VOLTAGE POWER TRANS CO CHINA SOUTH) 9. März 2018 (2018-03-09) * Abbildung 1 * * Absätze [0022] - [0026] * ----- | 1,18 | RECHERCHIERTE SACHGEBIETE (IPC) |
| A | DE 10 2013 007751 A1 (ABB TECHNOLOGY AG [CH]) 27. November 2014 (2014-11-27) * Anspruch 1; Abbildung 1 * * Absätze [0036], [0051], [0053] * ----- | 2 | B01D H01H H02G H02B |
| A | EP 1 091 182 A2 (TOSHIBA KK [JP]) 11. April 2001 (2001-04-11) * Anspruch 1; Abbildung 2 * ----- | 1-18 | |
| A | EP 1 360 985 A1 (UBE INDUSTRIES [JP]) 12. November 2003 (2003-11-12) * Anspruch 1; Abbildung 1 * * Absätze [0042], [0043], [0045], [0047] * ----- -/-- | 1-18 | |

Der vorliegende Recherchenbericht wurde für alle Patentansprüche erstellt

| Recherchenort | Abschlußdatum der Recherche | Prüfer |
|---|---|---|
| München | 16. April 2021 | Harf, Julien |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................
& : Mitglied der gleichen Patentfamilie, übereinstimmendes
    Dokument

EPO FORM 1503 03.82 (P04C03)

**EP 3 834 917 A1**

Europäisches Patentamt
European Patent Office
Office européen des brevets

# EUROPÄISCHER RECHERCHENBERICHT

Nummer der Anmeldung

EP 20 21 3258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 105 565 280 A (WANG XUN) 11. Mai 2016 (2016-05-11) * Zusammenfassung * ----- | 1-18 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 16. April 2021 | Harf, Julien |

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 20 21 3258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-04-2021

| Im Recherchenbericht angeführtes Patentdokument | Datum der Veröffentlichung | Mitglied(er) der Patentfamilie | Datum der Veröffentlichung |
|---|---|---|---|
| WO 2016165996 A1 | 20-10-2016 | CN 107683519 A<br>DE 102015206744 A1<br>DK 3283833 T3<br>EP 3283833 A1<br>US 2018087839 A1<br>WO 2016165996 A1 | 09-02-2018<br>03-11-2016<br>03-06-2019<br>21-02-2018<br>29-03-2018<br>20-10-2016 |
| EP 0885841 A1 | 23-12-1998 | DE 69800609 T2<br>EP 0885841 A1<br>JP H119951 A<br>JP 3356965 B2<br>KR 19990007129 A<br>TW 448069 B<br>US 6004377 A | 15-11-2001<br>23-12-1998<br>19-01-1999<br>16-12-2002<br>25-01-1999<br>01-08-2001<br>21-12-1999 |
| CN 107774100 A | 09-03-2018 | KEINE | |
| DE 102013007751 A1 | 27-11-2014 | DE 102013007751 A1<br>WO 2014180526 A1 | 27-11-2014<br>13-11-2014 |
| EP 1091182 A2 | 11-04-2001 | DE 60015900 T2<br>EP 1091182 A2<br>JP 4357046 B2<br>JP 2001110284 A<br>US 6966934 B1 | 03-11-2005<br>11-04-2001<br>04-11-2009<br>20-04-2001<br>22-11-2005 |
| EP 1360985 A1 | 12-11-2003 | EP 1360985 A1<br>US 2004045432 A1<br>WO 02058826 A1 | 12-11-2003<br>11-03-2004<br>01-08-2002 |
| CN 105565280 A | 11-05-2016 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3283833 B1